# EUROPEAN PATENT SPECIFICATION

(11) **EP 3 223 623 B1**
(45) Date of publication and mention of the grant of the patent: **14.10.2026**
(21) Application number: 15723367.7
(22) Date of filing: 29.04.2015
(51) Int. Cl.: A23K 40/20, A23K 40/30, A23K 10/30, A23K 50/40

(54) **FOOD COMPOSITION AND METHOD OF USE**
LEBENSMITTELZUSAMMENSETZUNG UND VERFAHREN ZUR VERWENDUNG
COMPOSITION ALIMENTAIRE ET PROCÉDÉ D'UTILISATION

(30) Priority: 29.12.2014 US 201462097169 P
(43) Date of publication of application: 04.10.2017
(73) Proprietor: Hill's Pet Nutrition, Inc., Topeka, KS 66603 (US)
(72) Inventor: JEWELL, Dennis, Lawrence, Kansas 66049 (US); FOLLIS, Amber, Topeka, Kansas 66617 (US); BADRI, Dayakar, Lawrence, Kansas 66047 (US)
(74) Representative: Wichmann, Hendrik
(86) International application number: PCT/US2015/028118
(87) International publication number: WO 2016/108946

(56) References cited:
- EP-A1- 2 263 474
- US-A- 4 911 943
- US-A1- 2008 085 343
- US-A1- 2008 193 485
- US-A1- 2011 236 532
- ANONYMOUS: "GNPD - Dog Biscuits", 1 December 2009 (2009-12-01), XP055205785, Retrieved from the Internet <URL:http://www.gnpd.com/sinatra/recordpage/1212600/from_search/Au8r4XvJDT/with_sort/2/> [retrieved on 20150731]
- ANONYMOUS: "GNPD - Adult Dog Food with Organic Chicken, Brown Rice and Flaxseed", 1 December 2011 (2011-12-01), XP055205787, Retrieved from the Internet <URL:http://www.gnpd.com/sinatra/recordpage/1687509/from_search/Au8r4XvJDT/with_sort/2/> [retrieved on 20150731]
- ANONYMOUS: "GNPD - Kleelis Quinoa Cat Tablets", 1 September 2000 (2000-09-01), XP055205789, Retrieved from the Internet <URL:http://www.gnpd.com/sinatra/recordpage/74255/from_search/Au8r4XvJDT/with_sort/2/> [retrieved on 20150731]
- BIANCHI FERNANDA ET AL: "Beneficial effects of fermented vegetal beverages on human gastrointestinal microbial ecosystem in a simulator", FOOD RESEARCH INTERNATIONAL, ELSEVIER APPLIED SCIENCE, BARKING, GB, vol. 64, 7 June 2014 (2014-06-07), pages 43 - 52, XP029049536, ISSN: 0963-9969, DOI: 10.1016/J.FOODRES.2014.05.072
- ANDREA MICAELA DALLAGNOL ET AL: "Fermentation of quinoa and wheat slurries by Lactobacillus plantarum CRL 778: proteolytic activity", APPLIED MICROBIOLOGY AND BIOTECHNOLOGY, vol. 97, no. 7, 6 November 2012 (2012-11-06), pages 3129 - 3140, XP055205609, ISSN: 0175-7598, DOI: 10.1007/s00253-012-4520-3
- SABRINA N. CASAROTTI ET AL: "Evaluation of the effect of supplementing fermented milk with quinoa flour on probiotic activity", JOURNAL OF DAIRY SCIENCE, vol. 97, no. 10, 1 October 2014 (2014-10-01), pages 6027 - 6035, XP055205539, ISSN: 0022-0302, DOI: 10.3168/jds.2014-8197

## Description

### BACKGROUND

With developing research of food science and animal health, more and more evidence shows that certain microorganisms may provide beneficial effects to animals. In general, commensals are microorganisms that provide health benefits to the host animal. Animals, such as but not limited to dogs and cats, carry trillions of gut microorganisms in their digesting systems, such as but not limited to the intestine and colon. The gut microorganisms, or collectively microbiota, include commensals that provide beneficial effects to animal health.

It is always desirable to improve the commensals in the animal, in some cases by providing different diets to the animals. The European Patent Office identified the following prior art documents: US 4 911 943 refers to a variety of different food products prepared from amaranth and quinoa as substitutes for wheat and other grains, milk, eggs, and a partial substitute for nuts. In addition, US 2008/085343 A1 discloses low allergenic nutrient compositions and their use as a replacement for individuals with a food allergy or a disease, or for use as an ergogenic aid for persons participating in sports. Furthermore, Bianchi et al. (2014) relates to the beneficial effects of fermented vegetal beverages on human gastrointestinal microbial ecosystem based on aqueous extracts of soy and quinoa. It is, however, sometimes more difficult to directly add live microorganisms in the diet because food processing may reduce the effectiveness of the microorganisms. Therefore, there is a need to produce animal food that can improve commensals in the microbiota in the animal.

### BRIEF SUMMARY

The current invention relates to a non-therapeutic method of altering one or more parameters of commensals in an animal, comprising feeding the animal a diet comprising quinoa grain in an amount effective to increase at least the percentage of clostridium in total microbiota, in the animal, as further defined in the claims.

In one embodiment, the amount of the quinoa grain is effective to increase the percentage of lactobacillus in total microbiota and the percentage of clostridium in total microbiota, as defined in the claims.

The disclosure (not part of the claimed invention) also relates to a method for making a pet food composition comprising the steps of (a) preconditioning by mixing wet and dry ingredients at elevated temperature to form a dough; (b) extruding the dough at a high temperature and pressure to form an extruded kibble; (c) drying the extruded kibble; and (d) enrobing the dried kibble with topical liquid and/or dry ingredients, wherein quinoa grain is applied to the kibble at step (a) and/or (d), in an amount effective to increase one or more parameters of commensals in an animal when the animal consumes the food composition, wherein the one or more parameters of commensals includes increasing at least the percentage of clostridium in total microbiota, and optionally the percentage of lactobacillus in total microbiota, wherein the animal is a domestic dog, as further defined in the claims.

It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1: Statistical heat map of amino acids.
Figure 2A-2G: Schematic of tryptophan and polyphenolic compound metabolism, along with statistical heat map and box plots of associated biochemicals.
Figure 3A-3H: Box plots of secondary bile acids.
Figures 4A-4M: Box plots of glucose related metabolites.
Figure 5A-5C: Statistical heat map of lipid related biochemicals.
Figure 6A-6I: Box plots of vitamin related biochemicals.
Figure 7A-7F: Box plots of 20-hydroxyeecdysone, genistate, and 3,4-dihydroxyphenylacetate (DOPAC).
Figure 8A-8C: Statistical heat map of amino acids and fatty acids.
Figure 9 and 10: Box plots of riboflavin and FAD.
Figure 11A-11C: Statistical heat map of microbiome related metabolites.
Figure 12: Box plots of 20-hydroxyeecdysone and genistate.

### DETAILED DESCRIPTION

The following description of certain embodiment(s) is merely exemplary in nature and is in no way intended to limit the invention, its application, or uses. As used throughout, ranges are used as shorthand for describing each and every value that is within the range. Any value within the range can be selected as the terminus of the range.

As used herein, unless otherwise stated, percentages and amounts in the specification should be understood to refer to percentages by weight. The amounts given are based on the active weight of the material. When referring to percentage of change (e.g. increase) related to a certain parameter, the percentage is calculated based on changed amount divided by the amount indicated as the denominator. For example, if the baseline percentage of lactobacillus in total microbiota is 12.91% and the measured percentage of lactobacillus in total microbiota is 17.44% after consumption of a diet comprising effective amount of quinoa grain, the increase would be (17.44-12.91)/12.91=35%.

As used herein, the term "animal" means any non-human organism belonging to the kingdom animalia. The term "pet" means a domestic animal including but not limited to domestic dogs, cats, horses, cows, ferrets, rabbits, pigs, rats, mice, gerbils, hamsters, horses, minks, and the like. Domestic dogs and cats are particular examples of pets. It will be appreciated by one of skill in the art that some pets have different nutritional needs and some pets have similar nutritional needs.

As used herein, the term "commensals" refers to live microorganisms that provide health benefits to their host animal. In some embodiments, "commensals" are the live beneficial microorganisms that are in the host body, e.g. in digestive tracts such as but not limited to intestine and/or colon. Examples of live microorganisms that provide health benefit to their host animals include but are not limited to bacteria.

As used herein, the term "microbiota" refers to the collection of microorganisms that are harbored in the digestive tracts of an animal. The microbiota of an animal includes different microorganisms, such as but not limited to the commensals in the animals digestive tracts.

As used herein, the term "lactobacillus" refers to microorganisms belonging to the Lactobacillus genus, which are gram-positive facultative anaerobic or microaerophlic rod-shaped bacteria, including species such as but not limited to *Lactobacillus acidophilus, Lactobacillus salivarius,* and *Lactobacillus reuteri.* In some embodiments, "lactobacillus" refers to commensals in the microbiota that belong to the Lactobacillus genus.

As used herein, the term "bifidobacteria" refers to microorganisms belonging to the Bifidobacterium genus, which are gram-positive, nonmotile, often branched anaerobic bacteria, including species such as but not limited to *Bifidobacterium bifidum, Bifidobacterium breve,* and *Bifidobacterium longum.* "Bifidobacteria" refer to commensals in the microbiota that belong to the Bifidobacterium genus.

As used herein, the term "clostridium" refers to microorganisms belonging to the Clostridium genus, which are gram-positive obligate anaerobes capable of producing endospores, including species such as but not limited to *Clostridium botulinum, Clostridium difficile, Clostridium perfringens, Clostridium tetani,* and *Clostridium sordellii.* In some embodiments, "clostridium" refers to commensals in the microbiota that belong to the Clostridium genus.

As used herein, the term "firmicutes" refers to microorganisms belonging to the Firmicutes phylum, most of which are gram-positive bacteria, including genera such as but not limited to Megasphaera, Pectinatus, Selenomonas and Zymophilus. "Firmicutes" refer to microorganisms in the microbiota that belong to the Firmicutes phylum.

As used herein, the term "bacteroidetes" refers to microorganisms belonging to the Bacteroidetes phylum, most of which are Gram-negative, nonsporeforming, anaerobic, and rod-shaped bacteria, including genus such as but not limited to Bacteroidetes. "Bacteroidetes" refer to microorganisms in the microbiota that belong to the Bacteroidetes phylum.

As used herein, the term "quinoa" refers to an ancient grain crop belonging to the C. quinoa species. Specific quinoa cultivars can be used. In specific embodiments, the quinoa cultivar is white. In one specific embodiment, the quinoa grain is not from the cherry vanilla cultivar. "Quinoa grain" refers to the seeds, grinding products or flour derived from the seeds of quinoa.

As used herein, unless otherwise stated for a particular parameter, the term "about" refers to a range that encompasses an industry-acceptable range for inherent variability in analyses or process controls, including sampling error. Consistent with the Model Guidance of AAFCO, inherent variability is not meant to encompass variation associated with sloppy work or deficient procedures, but, rather, to address the inherent variation associated even with good practices and techniques.

As used here, the term "diet" refers to a regulated selection of food and drink for an animal. A diet may comprise a fixed or varied combination or food and/or drink compositions. The diet may comprise the food composition. The food composition may comprise the ingredients and component of the diet herein disclosed.

Food compositions can be provided to an animal, such as but not limited to a pet, in the form of pet food. A variety of commonly known types of pet foods are available to pet owners. The selection of pet food includes but is not limited to wet pet food, semi-moist pet food, dry pet food and pet treats. Wet pet food generally has a moisture content greater than about 65%. Semi-moist pet food typically has a moisture content between 20% and 65% and may include humectants, potassium sorbate, and other ingredients to prevent microbial growth (bacteria and mold). Dry pet food such as but not limited to food kibbles generally has a moisture content below about 15%. Pet treats typically may be semi-moist, chewable treats; dry treats in any number of forms; chewable bones or baked, extruded or stamped treats; confection treats; or other kinds of treats as is known to one skilled in the art.

As used herein, the term "kibble" or "food kibble" refers to a particulate pellet like component of animal feeds, such as dog and cat feeds. In some embodiments, a food kibble has a moisture, or water, content of less than 15% by weight. Food kibbles may range in texture from hard to soft. Food kibbles may range in internal structure from expanded to dense. Food kibbles may be formed by an extrusion process or a baking process. In non-limiting examples, a food kibble may have a uniform internal structure or a varied internal structure. For example, a food kibble may include a core and a coating to form a coated kibble. It should be understood that when the term "kibble" or "food kibble" is used, it can refer to an uncoated kibble or a coated kibble.

As used herein, the term "extrude" or "extrusion" refers to the process of sending preconditioned and/or prepared ingredient mixtures through an extruder. Food kibbles can be formed by an extrusion processes wherein a kibble dough, including a mixture of wet and dry ingredients, can be extruded under heat and pressure to form the food kibble. Any type of extruder can be used, examples of which include but are not limited to single screw extruders and twin-screw extruders. The list of sources, ingredients, and components as described hereinafter are listed such that combinations and mixtures thereof are also contemplated.

The disclosure (not part of the claimed invention) relates to a food composition comprising quinoa grain in an amount effective to increase one or more parameters of commensals in an animal when the animal consumes the food composition, wherein the one or more parameters are selected from the group consisting of the percentage of lactobacillus in total microbiota, the percentage of bifidobacteria in total microbiota, the percentage of clostridium in total microbiota, and firmicutes to bacteroidetes ratio.

The current invention relates to a non-therapeutic method of altering one or more parameters of commensals in an animal, comprising feeding the animal a diet comprising quinoa grain in an amount effective to increase at least the percentage of clostridium in total microbiota in the animal, as further defined in the claims.

The animal is a dog or a cat. In specific embodiments, the animal is a cat, such as but not limited to a domesticated cat. In other specific embodiments, the animal is a dog, such as but not limited to a domesticated dog.

The phrase "increasing one or more parameters of commensals" is used to refer, for example, to an increase of the levels of the one or more parameters in an animal over time during which the animal consumes the food composition containing effective amount of quinoa grain compared to the levels of the one or more parameters in the same animal before the consumption of the food composition containing the effective amount of quinoa grain. Alternatively, the phrase "increasing one or more parameters of commensals" is used to refer, for example, to an increase of the levels of the one or more parameters in an animal after a period of time during which the animal consumes the food composition containing effective amount of quinoa grain compared to the levels of the one or more parameters in a control animal that consumes a control food composition in the same period. In one embodiment, the control food composition does not contain quinoa grain.

The method may further comprise measuring the levels of the one or more parameters in the animal prior to feeding the animal the diet comprising effective amount of quinoa grain. In some embodiments, baseline levels of the one or more parameters in the animal are established. In one embodiment, the baseline levels are a collection of single measurements of each of the one or more parameters prior to feeding the animal the diet comprising effective amount of quinoa grain. The baseline levels can be averages of a number of measurements for the levels of each of the one or more parameters prior to feeding the animal the diet comprising effective amount of quinoa grain.

The method may further comprise measuring the levels of the one or more parameters in the same animal after the animal consumes the diet comprising effective amount of quinoa grain at different time points. Moreover, the method may further comprise comparing the baseline levels of the one or more parameters in the animal prior to feeding the animal the diet comprising effective amount of quinoa grain to the levels of the one or more parameters in the same animal after the animal consumes the diet comprising effective amount of quinoa grain for a period of time. According to the present invention, the quinoa grain in the diet is effective to increase the levels of the one or more parameters, wherein the one or more parameters of commensals includes increasing at least the percentage of clostridium in total microbiota in the animal, as further defined in the claims.

In some embodiments of the present invention, the amount of the quinoa grain in the diet is effective to also increase the percentage of lactobacillus in total microbiota, as further defined in the claims. Also disclosed (not part of the claimed invention) is that the amount of the quinoa grain in the diet is effective to increase the percentage of bifidobacteria in total microbiota. The amount of the quinoa grain in the diet is effective to increase the percentage of clostridium in total microbiota. Also disclosed (not part of the claimed invention) is that the amount of the quinoa grain in the diet is effective to increase the firmicutes to bacteroidetes ratio.

Also disclosed (not part of the claimed invention) is that the amount of the quinoa grain in the diet is effective to increase the percentage of lactobacillus in total microbiota and the percentage of bifidobacteria in total microbiota. In some embodiments, the amount of the quinoa grain in the diet is effective to increase the percentage of lactobacillus in total microbiota and the percentage of clostridium in total microbiota. Also disclosed (not part of the claimed invention) is that the amount of the quinoa grain in the diet is effective to increase the percentage of lactobacillus in total microbiota and the firmicutes to bacteroidetes ratio. Also disclosed is that the amount of the quinoa grain in the diet is effective to increase the percentage of bifidobacteria in total microbiota and the percentage of clostridium in total microbiota. Also disclosed (not part of the claimed invention) is that the amount of the quinoa grain in the diet is effective to increase the percentage of bifidobacteria in total microbiota and the firmicutes to bacteroidetes ratio. Also disclosed is that the amount of the quinoa grain in the diet is effective to increase the percentage of clostridium in total microbiota and the firmicutes to bacteroidetes ratio. In some specific embodiments, the amount of the quinoa grain in the diet is effective to increase the percentage of lactobacillus in total microbiota and the percentage of clostridium in total microbiota in a cat. In some specific embodiments, the amount of the quinoa grain in the diet is effective to increase the percentage of lactobacillus in total microbiota and the percentage of clostridium in total microbiota in a cat, but not the percentage of bifidobacteria in total microbiota.

In the present disclosure, the amount of the quinoa grain in the diet is effective to increase the percentage of lactobacillus in total microbiota, the percentage of bifidobacteria in total microbiota, and the percentage of clostridium in total microbiota. In the disclosure, (not part of the claimed invention) the amount of the quinoa grain in the diet is effective to increase the percentage of lactobacillus in total microbiota and the percentage of bifidobacteria in total microbiota, and the firmicutes to bacteroidetes ratio. In the disclosure, the amount of the quinoa grain in the diet is effective to increase the percentage of bifidobacteria in total microbiota, the percentage of clostridium in total microbiota, and the firmicutes to bacteroidetes ratio. In the disclosure, (not part of the claimed invention) the amount of the quinoa grain in the diet is effective to increase the percentage of lactobacillus in total microbiota, the percentage of bifidobacteria in total microbiota, and the firmicutes to bacteroidetes ratio in a dog. In the disclosure, (not part of the claimed invention) the amount of the quinoa grain in the diet is effective to increase the percentage of lactobacillus in total microbiota, the percentage of bifidobacteria in total microbiota, and the firmicutes to bacteroidetes ratio, but not the percentage of clostridium in total microbiota in a dog.

In the present disclosure, the amount of the quinoa grain in the diet is effective to increase the percentage of lactobacillus in total microbiota, the percentage of bifidobacteria in total microbiota, the percentage of clostridium in total microbiota, and the firmicutes to bacteroidetes ratio.

A specific parameter for commensals may be measured with a method employing a series of nucleotide extractions, amplifications and sequencings, such as but not limited to the methods described for Examples 1 and 2, or any modifications thereof. For example, the percentage of a particular microbe may be calculated with the number of sequence reads associated with the microbe divided by the number of sequence reads associated with the total microbiota for a given sample/animal. The term "sequence reads" is understood in the art and refers to the frequency of occurrence of one or more gene sequences that belong to a particular species in a given sample. *See* Hand D. et al., PLoS ONE, 8(1): e53115, 2013 and Middelbos S. et al., PLoS ONE, 5(3): e9768, 2010. In particular, the percentage of lactobacillus in total microbiota may be measured with the number of sequence reads associated with lactobacillus divided by the number of sequence reads associated with the total microbiota for a given sample/animal. The percentage of bifidobacteria in total microbiota may be measured with the number of sequence reads associated with bifidobacteria divided by the number of sequence reads associated with the total microbiota for a given sample/animal. The percentage of clostridium in total microbiota may be measured with the number of sequence reads associated with clostridium divided by the number of sequence reads associated with the total microbiota for a given sample/animal. The firmicutes to bacteroidetes ratio may be measured with the number of sequence reads associated with the firmicutes divided by the number of sequence reads associated with the bacteroidetes for a given sample/animal.

The quinoa grain in the diet may be in an amount effective to increase the percentage of lactobacillus in total microbiota, the percentage of bifidobacteria in total microbiota, the percentage of clostridium in total microbiota, or the firmicutes to bacteroidetes ratio in an animal after the animal consumes the diet for a period of time compared to baseline levels in the same animal. For example, the amount of quinoa grain in the diet may be effective to increase the percentage of lactobacillus in total microbiota, the percentage of bifidobacteria in total microbiota, the percentage of clostridium in total microbiota, or the firmicutes to bacteroidetes ratio in an animal after the animal consumes the diet comprising effective amount of quinoa grain for about or at least about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 35, 40, 45, 50, 55, 60, 65, 70, 75, 80, 85, 90, 95, 100, 101, 105, 110, 113, 115, 120, 125, 130, 135, 140, 145 or 150 days compared to baseline levels in the same animal. In some embodiments, the amount of quinoa grain in the diet may be effective to increase the percentage of clostridium in total microbiota, and optionally the percentage of lactobacillus in an animal after the animal consumes the diet comprising effective amount of quinoa grain for within about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 35, 40, 45, 50, 55, 60, 65, 70, 75, 80, 85, 90, 95, 100, 101, 105, 110, 113, 115, 120, 125, 130, 135, 140, 145 or 150 days compared to baseline levels in the same animal.

The quinoa grain in the diet may be in an amount effective to increase the percentage of lactobacillus in total microbiota, the percentage of bifidobacteria in total microbiota, the percentage of clostridium in total microbiota, or the firmicutes to bacteroidetes ratio in an animal after the animal consumes the diet for a period of time compared to levels of the same parameters in a control animal consuming control food compositions in the same period. For example, the amount of quinoa grain in the diet may be effective to increase the percentage of lactobacillus in total microbiota, the percentage of bifidobacteria in total microbiota, the percentage of clostridium in total microbiota, or the firmicutes to bacteroidetes ratio in an animal after the animal consumes the diet comprising effective amount of quinoa grain for about or at least about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 35, 40, 45, 50, 55, 60, 65, 70, 75, 80, 85, 90, 95, 100, 101, 105, 110, 113, 115, 120, 125, 130, 135, 140, 145 or 150 days compared to levels of the same parameters in a control animal consuming control food compositions in the same period. In some embodiments, the amount of quinoa grain in the diet may be effective to increase the percentage of clostridium in total microbiota, and optionally the percentage of lactobacillus in total microbiota, in an animal after the animal consumes the diet comprising effective amount of quinoa grain for within about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 35, 40, 45, 50, 55, 60, 65, 70, 75, 80, 85, 90, 95, 100, 101, 105, 110, 113, 115, 120, 125, 130, 135, 140, 145 or 150 days compared to levels of the same parameters in a control animal consuming control food compositions in the same period.

In some embodiments, the quinoa grain in the diet is in an amount effective to increase the percentage of lactobacillus in total microbiota in the animal consuming the diet compared to baseline percentage of lactobacillus in total microbiota in the same animal or compared to the percentage of lactobacillus in total microbiota in a control animal consuming a control diet. For example, after consuming the diet comprising effective amount of quinoa grain for a period of time, the percentage of lactobacillus in total microbiota in the animal may be increased by about or at least about 5%, 10%, 15%, 20%, 25%, 30%, 35%, 40%, 45%, 50%, 55%, 60%, 65%, 70%, 75%, 80%, 85%, 90%, 100%, 105%, 110%, 115%, 120%, 125%, 130%, 135%, 140%, 145%, 150%, 155%, 160%, 165%, 170%, 175%, 180%, 185%, 190%, 195%, 200%, 205%, 210%, 215%, 220%, 225%, 230%, 235%, 240%, 245%, or 250% compared to baseline percentage of lactobacillus in total microbiota in the animal prior to consumption of the diet comprising effective amount of quinoa grain or compared to the percentage of lactobacillus in total microbiota in a control animal consuming a control diet. In one embodiment, the amount of quinoa grain in the diet is effective to increase the percentage of lactobacillus in total microbiota by about or at least about 35%. In one embodiment, the amount of quinoa grain in the diet is effective to increase the percentage of lactobacillus in total microbiota by about or at least about 35% in a dog. In another embodiment, the amount of quinoa grain in the diet is effective to increase the percentage of lactobacillus in total microbiota by about or at least about 200%. In another embodiment, the amount of quinoa grain in the diet is effective to increase the percentage of lactobacillus in total microbiota by about or at least about 200% in a cat. For example, if the baseline percentage of lactobacillus in total microbiota is 12.91% and the measured percentage of lactobacillus in total microbiota is 17.44% after consumption of a diet comprising effective amount of quinoa grain, the increase would be (17.44-12.91)/12.91=35%.

In the disclosure, (not part of the claimed invention) the quinoa grain in the diet is in an amount effective to increase the percentage of bifidobacteria in total microbiota in the animal consuming the diet compared to baseline percentage of bifidobacteria in total microbiota in the same animal or compared to the percentage of bifidobacteria in total microbiota in a control animal consuming a control diet. For example, after consuming the diet comprising effective amount of quinoa grain for a period of time, the percentage of bifidobacteria in total microbiota in the animal may be increased by about or at least about 5%, 10%, 15%, 20%, 25%, 30%, 35%, 40%, 45%, 50%, 55%, 60%, 65%, 70%, 75%, 80%, 85%, 90%, 100%, 105%, 110%, 115%, 120%, 125%, 130%, 135%, 140%, 145%, 150%, 155%, 160%, 165%, 170%, 175%, 180%, 185%, 190%, 195%, 200%, 205%, 210%, 215%, 220%, 225%, 230%, 235%, 240%, 245%, or 250% compared to baseline percentage of bifidobacteria in total microbiota in the animal prior to consumption of the diet comprising effective amount of quinoa grain or compared to the percentage of bifidobacteria in total microbiota in a control animal consuming a control diet. In the disclosure, the amount of quinoa grain in the diet is effective to increase the percentage of bifidobacteria in total microbiota by about or at least about 80%. In the disclosure, the amount of quinoa grain in the diet is effective to increase the percentage of bifidobacteria in total microbiota by about or at least about 80% in a dog. For example, if the baseline percentage of bifidobacteria in total microbiota is 1.15% and the measured percentage of bifidobacteria in total microbiota is 2.09% after consumption of a diet comprising effective amount of quinoa grain, the increase would be (2.09-1.15)/1.15=81.7%.

The quinoa grain in the diet is in an amount effective to increase the percentage of clostridium in total microbiota in the animal consuming the diet compared to baseline percentage of clostridium in total microbiota in the same animal or compared to the percentage of clostridium in total microbiota in a control animal consuming a control diet. For example, after consuming the diet comprising effective amount of quinoa grain for a period of time, the percentage of clostridium in total microbiota in the animal may be increased by about or at least about 5%, 10%, 15%, 20%, 25%, 30%, 35%, 40%, 45%, 50%, 55%, 60%, 65%, 70%, 75%, 80%, 85%, 90%, 100%, 105%, 110%, 115%, 120%, 125%, 130%, 135%, 140%, 145%, 150%, 155%, 160%, 165%, 170%, 175%, 180%, 185%, 190%, 195%, 200%, 205%, 210%, 215%, 220%, 225%, 230%, 235%, 240%, 245%, or 250% compared to baseline percentage of clostridium in total microbiota in the animal prior to consumption of the diet comprising effective amount of quinoa grain or compared to the percentage of clostridium in total microbiota in a control animal consuming a control diet. In one embodiment, the amount of quinoa grain in the diet is effective to increase the percentage of clostridium in total microbiota by about or at least about 175%. In one embodiment, the amount of quinoa grain in the diet is effective to increase the percentage of clostridium in total microbiota by about or at least about 175% in a cat. For example, if the baseline percentage of clostridium in total microbiota is 1.89% and the measured percentage of clostridium in total microbiota is 5.22% after consumption of a diet comprising effective amount of quinoa grain, the increase would be 5.22-1.89)/1.89=176%.

In the disclosure, (not part of the claimed invention) the quinoa grain in the diet is in an amount effective to increase the firmicutes to bacteroidetes ratio in the animal consuming the diet compared to baseline firmicutes to bacteroidetes ratio in the same animal or compared to the firmicutes to bacteroidetes ratio in a control animal consuming a control diet. For example, after consuming the diet comprising effective amount of quinoa grain for a period of time, the firmicutes to bacteroidetes ratio in the animal may be increased by about or at least about 5%, 10%, 15%, 20%, 25%, 30%, 35%, 40%, 45%, 50%, 55%, 60%, 65%, 70%, 75%, 80%, 85%, 90%, 100%, 105%, 110%, 115%, 120%, 125%, 130%, 135%, 140%, 145%, 150%, 155%, 160%, 165%, 170%, 175%, 180%, 185%, 190%, 195%, 200%, 205%, 210%, 215%, 220%, 225%, 230%, 235%, 240%, 245%, or 250% compared to baseline firmicutes to bacteroidetes ratio in the animal prior to consumption of the diet comprising effective amount of quinoa grain or compared to the firmicutes to bacteroidetes ratio in a control animal consuming a control diet. In the disclosure, the amount of quinoa grain in the diet is effective to increase the firmicutes to bacteroidetes ratio by about or at least about 110%. In one embodiment, the amount of quinoa grain in the diet is effective to increase the firmicutes to bacteroidetes ratio by about or at least about 110% in a dog. For example, if the baseline firmicutes to bacteroidetes ratio is 39.2 and the measured firmicutes to bacteroidetes ratio is 82.6 after consumption of a diet comprising effective amount of quinoa grain, the increase would be (82.6-39.2)/39.2=110.7%.

In the disclosure, (not part of the claimed invention) the amount of quinoa grain in the diet is effective to increase the percentage of lactobacillus in total microbiota by about at least about 35%, the percentage of bifidobacteria in total microbiota by about or at least about 80%, and the firmicutes to bacteroidetes ratio by about or at least about 110%. In the disclosure, (not part of the claimed invention) the amount of quinoa grain in the diet is effective to increase the percentage of lactobacillus in total microbiota by about at least about 35%, the percentage of bifidobacteria in total microbiota by about or at least about 80%, and the firmicutes to bacteroidetes ratio by about or at least about 110% in a dog consuming the diet compared to the baseline levels in the same dog. In the disclosure, (not part of the claimed invention) the amount of quinoa grain in the diet is effective to increase the percentage of lactobacillus in total microbiota by about at least about 35%, the percentage of bifidobacteria in total microbiota by about or at least about 80%, and the firmicutes to bacteroidetes ratio by about or at least about 110% in a dog consuming the diet compared to the percentage of lactobacillus in total microbiota, the percentage of bifidobacteria in total microbiota, and the firmicutes to bacteroidetes ratio in a control dog consuming a control diet.

In one embodiment, the amount of quinoa grain in the diet is effective to increase the percentage of lactobacillus in total microbiota by about at least about 200% and the percentage of clostridium in total microbiota by about or at least about 175%. In one specific embodiment, the amount of quinoa grain in the diet is effective to increase the percentage of lactobacillus in total microbiota by about at least about 200% and the percentage of clostridium in total microbiota by about or at least about 175% in a cat compared to the baseline levels in the same cat. In another specific embodiment, the amount of quinoa grain in the diet is effective to increase the percentage of lactobacillus in total microbiota by about at least about 200% and the percentage of clostridium in total microbiota by about or at least about 175% in a cat compared to the percentage of lactobacillus in total microbiota and the percentage of clostridium in a control cat consuming a control diet.

The food composition of the present disclosure(not part of the claimed invention) may comprise quinoa grain. The quinoa grain may be about or less than about 0.001 %, 0.01 %, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, 10%, 11%, 12%, 13%, 14%, 15%, 20%, 25%, 30%, 35%, 40%, 45%, 50%, 55%, 60%, 65%, 70%, 75% or 80% of the total food composition by weight. The quinoa grain may be more than about 0.001 %, 0.01 %, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, 10%, 11%, 12%, 13%, 14%, 15%, 20%, 25%, 30%, 35%, 40%, 45%, 50%, 55%, 60%, 65%, 70%, 75% or 80% of the total food composition by weight. The quinoa grain may be 1-30%, 2-30%, 3-30%, 4-30%, 5-30%, 1-25%, 2-25%, 3-25%, 4-25%, 5-25%, 1-20%, 2-30%, 3-20%, 4-20%, 5-20%, 5-19%, 5-18%, 5-17%, 5-16%, 5-15%, 5-14%, 5-13%, 5-12%, 5-11%, 5-10%, 10-20%, 10-19%, 10-18%, 10-17%, 10-16%, 10-15%, 10-14%, 10-13%, 10-12%, or 10-11% of the total food composition by weight.

The food composition (not part of the claimed invention) containing effective amount of quinoa grain may be combined or mixed with food composition that does not contain quinoa grain. For example, the food composition containing effective amount of quinoa grain may be more than about 1%, 5%, 10%, 15%, 20%, 25%, 30%, 35%, 40%, 45%, 50%, 55%, 60%, 65%, 70%, 75%, 80%, 85%, 90%, 95% or 99% of the total food composition by weight. The food composition (not part of the claimed invention) containing effective amount of quinoa grain may be less than about 1%, 5%, 10%, 15%, 20%, 25%, 30%, 35%, 40%, 45%, 50%, 55%, 60%, 65%, 70%, 75%, 80%, 85%, 90%, 95%, 99% or 100% of the total food composition by weight. The diet may comprise the food composition comprising effective amount of quinoa grain and other food compositions that do not comprise quinoa grain.

The food composition (not part of the claimed invention) containing effective amount of quinoa grain may comprise different kinds of food products. For example, the food composition containing effective amount of quinoa grain may comprise one or more types of dry food (e.g. pellets or kibbles), semi-moist food or wet food. The different kinds of food products may comprise different amount of quinoa grain and some of the food products may not comprise quinoa grain. For example, a food composition may comprise dry food comprising quinoa grain and semi-moist food that does not comprise quinoa grain and/or we food that does not comprise quinoa grain. The dry food containing quinoa grain may be more than about 1%, 5%, 10%, 15%, 20%, 25%, 30%, 35%, 40%, 45%, 50%, 55%, 60%, 65%, 70%, 75%, 80%, 85%, 90%, 95% or 99% of the total food composition by weight. The dry food containing quinoa grain may be less than about 5%, 10%, 15%, 20%, 25%, 30%, 35%, 40%, 45%, 50%, 55%, 60%, 65%, 70%, 75%, 80%, 85%, 90%, 95%, 99% or 100% of the total food composition by weight. The dry food containing quinoa grain may be combined or mixed with semi-moist food or wet food that also contain quinoa grain, in the same or a different amount. The dry food containing quinoa grain may be more than about 1%, 5%, 10%, 15%, 20%, 25%, 30%, 35%, 40%, 45%, 50%, 55%, 60%, 65%, 70%, 75%, 80%, 85%, 90%, 95% or 99% of the total food composition by weight. The dry food containing quinoa grain may be less than about 5%, 10%, 15%, 20%, 25%, 30%, 35%, 40%, 45%, 50%, 55%, 60%, 65%, 70%, 75%, 80%, 85%, 90%, 95%, 99% or 100% of the total food composition by weight.

The disclosure also relates to methods of making a pet food composition, (not part of the claimed invention) wherein the food composition comprises quinoa grain in an amount effective to increase one or more parameters in an animal after the animal consumes the food composition, wherein the one or more parameters are selected from the group consisting of the percentage of lactobacillus in total microbiota, the percentage of bifidobacteria in total microbiota, the percentage of clostridium in total microbiota, and the firmicutes to bacteroidetes ratio.

The disclosure also relates to methods for making a pet food composition (not part of the claimed invention) comprising the steps of (a) preconditioning by mixing wet and dry ingredients at elevated temperature to form a dough; (b) extruding the dough at a high temperature and pressure to form an extruded kibble; (c) drying the extruded kibble; and (d) enrobing the dried kibble with topical liquid and/or dry ingredients, wherein quinoa grain is applied to the kibble at step (a) and/or (d), in an amount effective to increase one or more parameters of commensals in an animal when the animal consumes the food composition, wherein the one or more parameters of commensals includes increasing at least the percentage of clostridium in total microbiota, and optionally the percentage of lactobacillus in total microbiota.

The quinoa grain can be applied to the dough in step (a) by mixing with other ingredient to form the dough. The quinoa grain can be applied as a dry ingredient in step (a). The quinoa grain can be applied in the form of flour derived from quinoa seeds.

The dough can be prepared in any suitable means from any suitable ingredients, such as, for example, a protein source, a carbohydrate source, a fat source, and any other ingredients suitable for animal or pet nutrition.

Similarly, the topical liquid and/or dry ingredients that are used for enrobing the dough can be prepared in any suitable means from any suitable ingredients, such as, for example, a protein source, a carbohydrate source, a fat source, and any other ingredients suitable for animal or pet nutrition.

The food composition can comprise one or more ingredients such as but not limited to flax, corn, rim brewers, pea, chicken, soybean, tomato, cellulose, wheat, beet, lysine, potassium chloride, methionine, sodium chloride, carrot, dicalcium phosphate, vitamin premix, carnitine,, lipoic acid alpha, mineral premix, calcium carbonate, taurine, glucosamine hydrochloride, chondroitin sulfate, grain blend, lactic acid, choline chloride, grain blend, palatant, fish oil, coconut oil, vitamin E oil, starch, poultry, fish, dairy, pork, beef, lamb, venison, and rabbit.

The food composition of the present disclosure (not part of the claimed invention) comprises one or more amino acid such as but not limited to arginine, histidine, isoleucine, leucine, lysine, methionine, phenylala nine, threonine, tryptophan, valine, taurine, carnitine, alanine, aspartate, cystine, glutamate, glutamine, glycine, proline, serine, tyrosine, and hydroxyproline.

The food composition of the present disclosure (not part of the claimed invention) comprises one or more fatty acids such as but not limited to lauric acid, myristic acid, palmitic acid, palmitoleic acid, margaric acid, margaroleic acid, stearic acid, oleic acid, linoleic acid, g-linolenic acid, a-linolenic acid, stearidonic acid, arachidic acid, gadoleic acid, DHGLA, arachidonic acid, eicossatetra acid, EPA, behenic acid, erucic acid, docosatetra acid, and DPA.

The food composition of the present disclosure (not part of the claimed invention) comprises one or more macronutrients such as but not limited to moisture, protein, fat, crude fiber, ash, dietary fiber, soluble fiber, insoluble fiber, raffinose, and stachyose.

The food composition of the present disclosure (not part of the claimed invention) comprises one or more micro nutrients such as but not limited to beta-carotene, alpha-lipoic acid, glucosamine, chondroitin sulfate, lycopene, lutein, and quercetin.

The food composition of the present disclosure (not part of the claimed invention) comprises one or more minerals such as but not limited to calcium, phosphorus, potassium, sodium, chloride, iron, copper, copper, manganese, zinc, iodine, selenium, selenium, cobalt, sulfur, fluorine, chromium, boron, and oxalate.

The food composition of the present disclosure (not part of the claimed invention) comprises one or more vitamins such as but not limited to vitamin A, vitamin D, vitamin E, quinoa grain, vitamin C, thiamine, riboflavin, niacin, pyridoxine, pantothenic acid, folic acid, vitamin B12, biotin, and choline

### EXAMPLES

Studies were conducted in dogs and cats to demonstrate the effects of grains, including quinoa grain, on certain parameters for commensals and certain metabolites. The dogs in the study were adult dogs with age ranging from 3 years and 3 months to 8 years and 4 months and had no known health issues. The dogs were fed with diets comprising quinoa grain or other types of grain for 45 minutes overnight for 14 days. The cats in the study were adult cats with age ranging from 3 years and 8 months to 12 years and 10 months and had no known health issues. The cats were fed with diets comprising quinoa grain or other types of grain for 20 hours each day for 14 days. The dogs and cats maintained the target weight, especially during the collection period. Complete fecal output for dogs and cats was collected on days 11 through 15 and measurements were conducted with the fecal sample as shown in Examples 1-4. The groups of animals fed with different diets are shown in Table 1.

**Table 1**

| Diet | Tested Grain % | Canine | Feline |
|---|---|---|---|
| Control | | 23 | 26 |
| Quinoa | 5% | 6 | 5 |
| | 10% | 6 | 6 |
| | 20% | 6 | 5 |
| Buckwheat | 5% | 6 | 6 |
| | 10% | 6 | 6 |
| | 20% | 6 | 6 |
| Amaranth | 5% | 6 | 6 |
| | 10% | 6 | 6 |
| | 20% | 6 | 6 |
| Coarse Bulghur | 5% | 6 | 6 |
| | 10% | 6 | 6 |
| | 20% | 6 | 6 |
| Fine Bulghur | 5% | 6 | 6 |
| | 10% | 6 | 6 |
| | 20% | 6 | 6 |
| Barley | 5% | 6 | 6 |
| | 10% | 6 | 6 |
| | 20% | 6 | 6 |

In Table 1, control for dogs refers to the group of dogs fed with a control diet containing 9.5% red whole wheat, 9.5% cracked barley, 9.5% whole corn, 9.5% whole sorghum and 13% brewers rice; control for cats refers to the group of cats fed with a diet containing 22% red whole wheat and 11% brewers rice. The other groups of dogs and cats were fed with diets containing different types of grain, such as the quinoa grain, in addition to the carbohydrate sources in the controls. The grains identified in Table 1 for the non-control groups for both dogs and cat were added by evenly replacing the carbohydrate sources in the respective control diets. The quinoa grain in the study was white quinoa. Each non-control group contains three sub-groups with 5%, 10% or 20% of the grain identified in Table 1. Table 1 also shows the number of dogs or cats in each group and sub-group.

Table 1A demonstrates the food intake of the groups of dogs and cats in Table 1.

**Table 1A**

| Grain | Canine Food Intake (Food/BW) | Canine Food Intake (Food/BW-met) | Feline Food Intake (Food/BW) | Feline Food Intake (Food/BW-met) |
|---|---|---|---|---|
| Control | 107.8 | 196.6 | 62.9 | 95.3 |
| amaranth | 102.0 | 189.3 | 60.0 | 93.4 |
| barley | 105.6 | 197.6 | 59.7 | 90.3 |
| buckwheat | 119.3 | 214.3 | 64.2 | 97.5 |
| coarse bulghur | 103.8 | 193.3 | 61.9 | 94.1 |
| fine bulghur | 110.1 | 205.7 | 62.7 | 95.0 |
| quinoa | 95.7 | 177.4 | 61.1 | 92.5 |

In Table 1A, the results are provided as average food intake (grams) divided by initial animal body weight (BW, kilograms). "Food/BW-met" refers to grams intake per kilogram body weight raised to the ¾ power, which is metabolic body weight and may more appropriately scales intake to weight. There was no statistically significant effect of grain on any of these parameters.

### Example 1

The results in Example 1 show that that quinoa grain can increase certain parameters for commensals. Dogs were fed a control diet or one of the six diets containing different types of grains as described in Table 1. Fecal samples were collected and analyzed for the percentage of lactobacillus in total microbiota, the percentage of bifidobacteria in total microbiota, the percentage of clostridium in total microbiota, and the firmicutes to bacteroidetes ratio.

Total fecal DNA was extracted from frozen feces samples by using a MOBIO POWERFECAL DNA Kit. Following total DNA extraction, 16s rRNA amplicon was developed from the samples by employing PCR using the primer sets spanning V3 and V5 (Canines) hypervariable regions and the amplicons were then qualitatively analyzed by an AGILENT 2100 Bioanalyzer. After the amplicon quality was verified, index PCR was performed followed by library quantification, normalization and pooling the samples. Final pooled sample library was loaded in a MISEQ v2 (for canines) sample loading cartridge kit and the cartridge was placed in a MISEQ ILLUMINA Sequencer for sequencing the samples. The library sequence files were further processed in MISEQ ILLUMINA Reporter to classify the sequence reads by using the Greengenes database. After developing the classification file, the abundance (expressed in percentage or ratio) of particular microbe at genera or phyla level was calculated with the number of sequence reads associated with a given genera or phyla divided by the number of sequence reads associated with the total microbiota for a given sample/animal.

In Tables 2-5, the results presented reflect an average of the measurements derived from subjects fed with the different diets with different grains. In Tables 2-5, LSMEAN refers to least squares means; Pr refers to probability.

The results for the percentage of lactobacillus in total microbiota are shown in Table 2.

**Table 2**

| Grain | Lactobacillus LSMEAN (% in total microbiota) | Standard Error | Pr > \| t \| | Pr (compared to control) |
|---|---|---|---|---|
| control | 12.9134516 | 2.4489897 | <.0001 | / |
| amaranth | 15.6739775 | 2.7074600 | <.0001 | 0.4510 |
| barley | 13.4523488 | 2.7074600 | <.0001 | 0.8829 |
| buckwheat | 14.8276195 | 2.7074600 | <.0001 | 0.6010 |
| coarse bulghur | 13.8214086 | 2.7074600 | <.0001 | 0.8040 |
| fine bulghur | 11.8060322 | 2.7074600 | <.0001 | 0.7621 |
| quinoa | 17.4353905 | 2.7074600 | <.0001 | 0.2178 |

The presence of quinoa in the diet resulted in a 35% increase of the percentage of lactobacillus in total microbiota.

The results for the percentage of bifidobacteria in total microbiota are shown in Table 3.

**Table 3**

| Grain | Bifidobacterium LSMEAN (% total microbiota) | Standard Error | Pr > \| t \| | Pr (compared to control) |
|---|---|---|---|---|
| control | 1.15075797 | 0.24747850 | <.0001 | / |
| amaranth | 1.04355372 | 0.27359777 | 0.0002 | 0.7719 |
| barley | 0.99880163 | 0.27359777 | 0.0004 | 0.6811 |
| buckwheat | 1.42966926 | 0.27359777 | <.0001 | 0.4511 |
| coarse bulghur | 1.14217285 | 0.27359777 | <.0001 | 0.9815 |
| fine bulghur | 1.24373322 | 0.27359777 | <.0001 | 0.8014 |
| quinoa | 2.09439977 | 0.27359777 | <.0001 | 0.0117 |

The presence of quinoa in the diet resulted in an 80% increase of the percentage of bifidobacteria in microbiota as compared to the control. Quinoa was also different from the other tested variables: amaranth (0.0076), barley (0.0054), buckwheat (0.0883), coarse bulghur (0.0152), and fine bulghur (0.0298) while no other grain differed from each other.

The results for the percentage of clostridium in total microbiota are shown in Table 4.

**Table 4**

| Grain | Clostridium LSMEAN (% total microbiota) | Standard Error | Pr > \| t \| | Pr (compared to control) |
|---|---|---|---|---|
| Control | 6.73710459 | 0.73165600 | <.0001 | / |
| amaranth | 6.10022228 | 0.80887614 | <.0001 | 0.5603 |
| barley | 6.38251222 | 0.80887614 | <.0001 | 0.7457 |
| buckwheat | 5.46534633 | 0.80887614 | <.0001 | 0.2459 |
| coarse bulghur | 8.56655828 | 0.80887614 | <.0001 | 0.0960 |
| fine bulghur | 6.44645344 | 0.80887614 | <.0001 | 0.7903 |
| quinoa | 7.23721711 | 0.80887614 | <.0001 | 0.6474 |

The results for the firmicutes to bacteroidetes ratio are shown in Table 5.

**Table 5**

| Grain | firmicutes to bacteroidetes ratio, LSMEAN | Standard Error |
|---|---|---|
| control | 39.1938 | 15.4 |
| barley | 22.9734 | 19.5 |
| buckwheat | 81.6856 | 19.5 |
| coarse bulghur | 54.3820 | 19.5 |
| fine bulghur | 61.2558 | 19.5 |
| quinoa | 82.5855 | 19.5 |

The presence of quinoa in the diet resulted in a 110% increase of the firmicutes to bacteroidetes ratio.

### Example 2

Studies were conducted in cats to show that quinoa grain can increase certain parameters for commensals. Cats were fed a control diet or one of the six diets containing different types of grains as described in Table 1. Fecal samples were collected and analyzed for the percentage of lactobacillus in total microbiota, the percentage of bifidobacteria in total microbiota, and the percentage of clostridium in total microbiota.

Total fecal DNA was extracted from frozen feces samples by using a MOBIO POWERFECAL DNA Kit. Following total DNA extraction, 16s rRNA amplicon was developed from the samples by employing PCR using the primer sets spanning V3 and V4 (Felines) hypervariable regions and the amplicons were then qualitatively analyzed by an AGILENT 2100 Bioanalyzer. After the amplicon quality was verified, index PCR was performed followed by library quantification, normalization and pooling the samples. Final pooled sample library was loaded in a MISEQ v3 (for felines) sample loading cartridge kit and the cartridge was placed in a MISEQ ILLUMINA Sequencer for sequencing the samples. The sample sequence files were processed by using MOTHUR followed by standard methods and classify the sequence reads by using Greengenes database. After developing the classification file, the abundance (expressed in percentage) of particular microbe at genera or phyla level was calculated with the number of sequence reads associated with a given genera or phyla divided by the number of sequence reads associated with the total microbiota for a given sample/animal.

In Tables 6-8, the results presented reflect an average of the measurements derived from subjects fed with the different diets with different grains. In Tables 6-8, LSMEAN refers to least squares means; Pr refers to probability.

The results for the percentage of lactobacillus in total microbiota are shown in Table 6.

**Table 6**

| Grain | Lactobacillus LSMEAN (% total microbiota) | Standard Error | Pr > \| t \| | Pr (compared to Control) |
|---|---|---|---|---|
| control | 3.9149677 | 1.6295018 | 0.0178 | / |
| amaranth | 3.6735114 | 1.9584174 | 0.0630 | 0.9246 |
| barley | 6.8341144 | 1.9584174 | 0.0007 | 0.2541 |
| buckwheat | 3.7656219 | 1.9584174 | 0.0568 | 0.9533 |
| coarse bulghur | 7.1343887 | 1.9584174 | 0.0004 | 0.2087 |
| fine bulghur | 1.8801980 | 1.9584174 | 0.3389 | 0.4260 |
| quinoa | 11.9740063 | 2.0772153 | <.0001 | 0.0028 |

The presence of quinoa in the diet resulted in a 206% increase of the percentage of lactobacillus in total microbiota.

The results for the percentage of bifidobacteria in total microbiota are shown in Table 7.

**Table 7**

| Grain | Bifidobacterium LSMEAN (% total microbiota) | Standard Error | Pr > \| t \| | Pr (compared to control) |
|---|---|---|---|---|
| Control | 18.3344624 | 2.0901409 | <.0001 | / |
| amaranth | 27.8488359 | 2.5120367 | <.0001 | 0.0043 |
| barley | 19.6638256 | 2.5120367 | <.0001 | 0.6849 |
| buckwheat | 22.6171439 | 2.5120367 | <.0001 | 0.1924 |
| coarse bulghur | 13.8721857 | 2.5120367 | <.0001 | 0.1745 |
| fine bulghur | 15.4000629 | 2.5120367 | <.0001 | 0.3709 |
| quinoa | 13.9269206 | 2.6644173 | <.0001 | 0.1955 |

The results for the percentage of clostridium in total microbiota are shown in Table 8.

**Table 8**

| Grain | Clostridium LSMEAN (% total microbiota) | Standard Error | Pr > \| t \| | Pr (compared to control) |
|---|---|---|---|---|
| control | 1.88852950 | 0.93372208 | 0.0452 | / |
| amaranth | 2.32641606 | 1.12219428 | 0.0402 | 0.7647 |
| barley | 4.02087906 | 1.12219428 | 0.0005 | 0.1466 |
| buckwheat | 1.88864683 | 1.12219428 | 0.0949 | 0.9999 |
| coarse bulghur | 2.87399750 | 1.12219428 | 0.0116 | 0.5009 |
| fine bulghur | 5.33267183 | 1.12219428 | <.0001 | 0.0199 |
| quinoa | 5.22100737 | 1.19026678 | <.0001 | 0.0294 |

The presence of quinoa in the diet resulted in a 176% increase of the percentage of clostridium in total microbiota.

### Example 3 (not according to the invention)

Dogs were fed a control diet or one of the six diets containing different types of grains at the concentrations of 5%, 10% or 20% as described in Table 1. Fecal samples were collected and analyzed for metabolites.

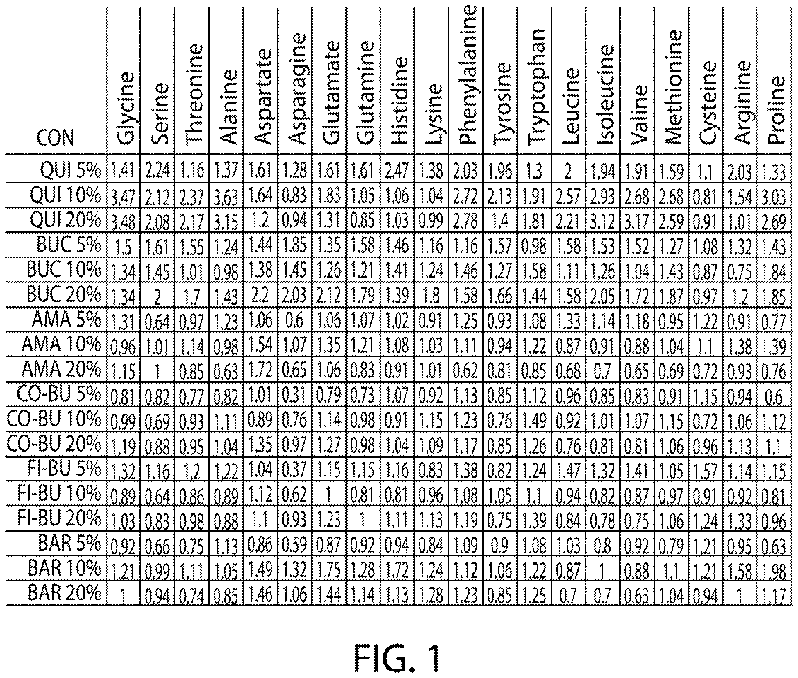

As shown in Figure 1, fecal samples derived from dogs fed with either the quinoa or the buckwheat diet contained significantly higher levels of amino acids and their associated metabolites compared to the control and other dietary groups, suggesting that quinoa and buckwheat may contain higher amounts of protein and/or induce protein metabolism differently in canines.

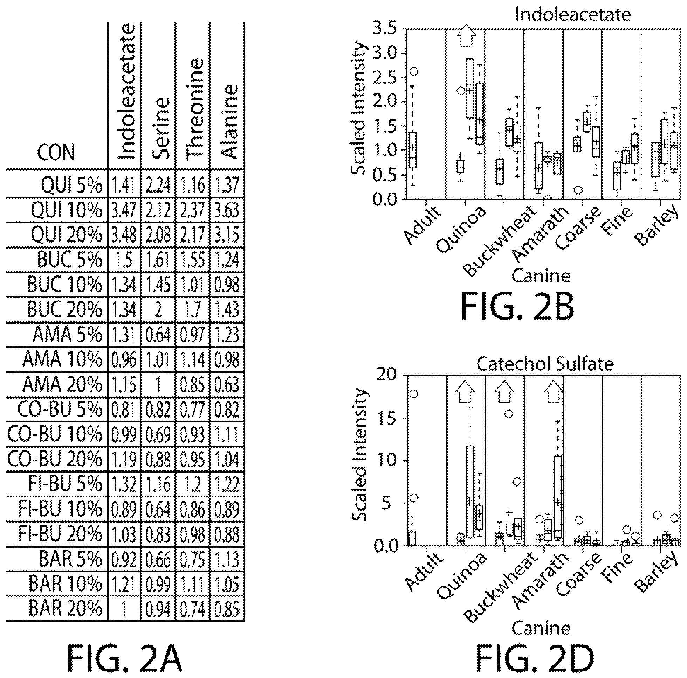

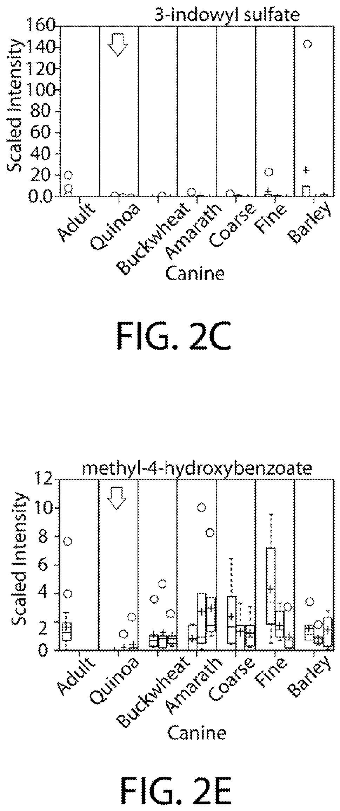

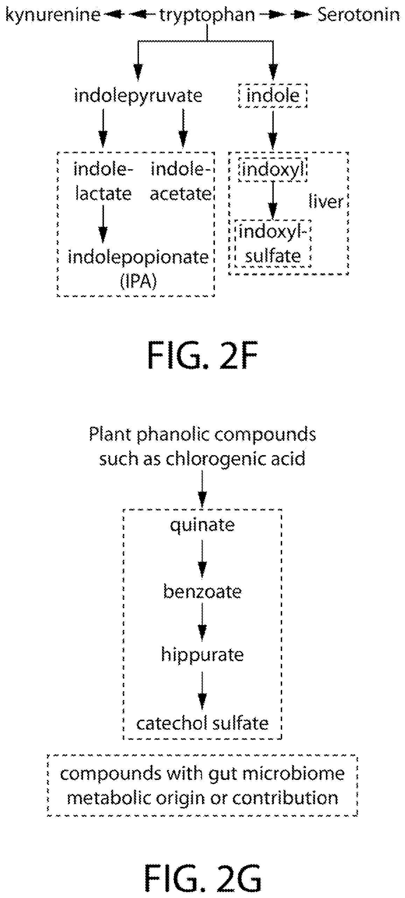

As shown in Figure 2, dogs fed with the quinoa diet had significantly increased levels of indoleacetate and catechol sulfate, while decreased levels of 3-indoxyl sulfate and methyl-4-hydroxybenzoate compared to the controls. Buckwheat and amaranth appeared to increase the levels of catechol sulfate when given at high concentrations.

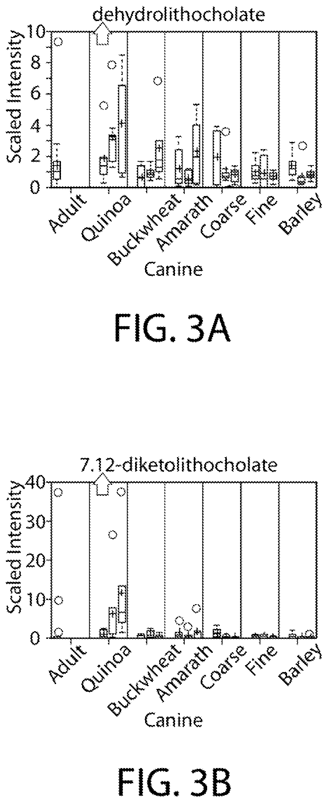

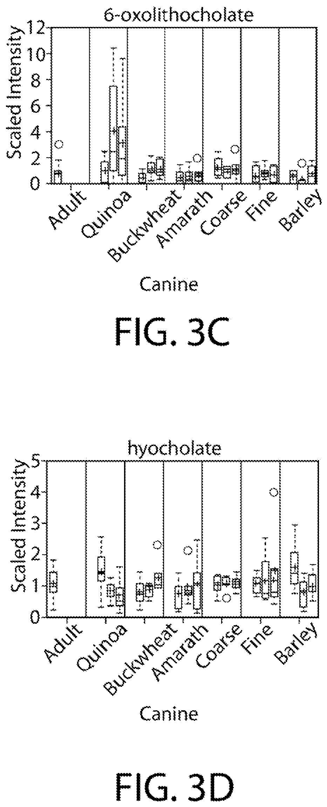

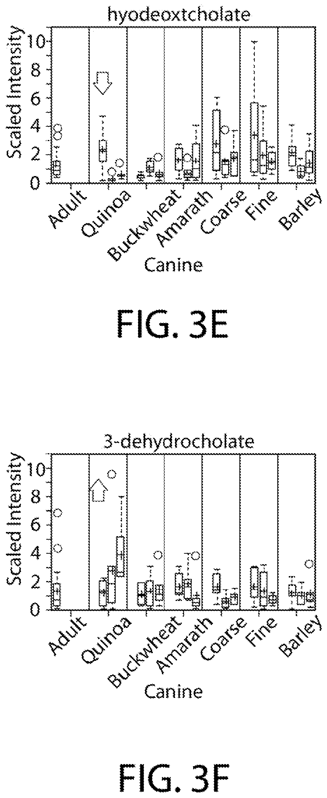

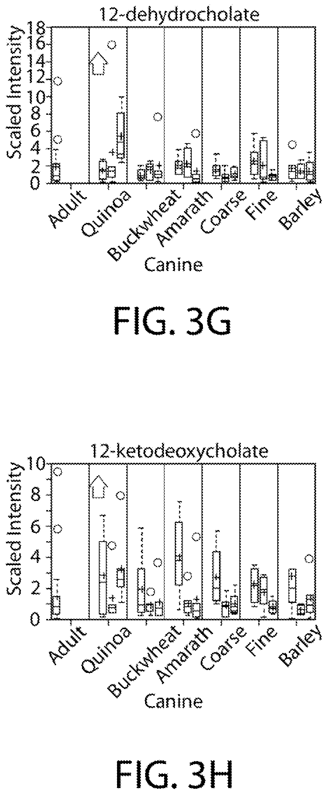

As shown in Figure 3, dogs fed with the quinoa diet had significant changes in several secondary bile acids.

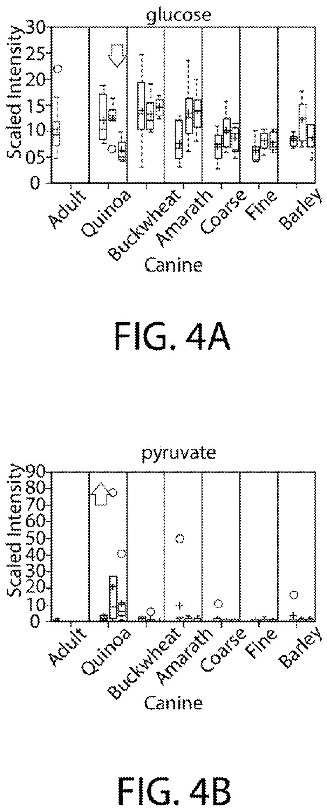

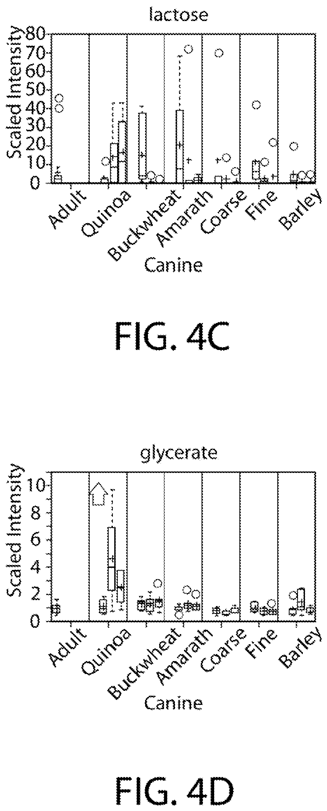

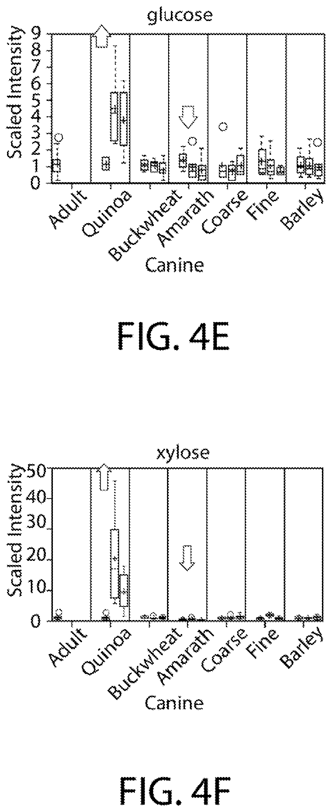

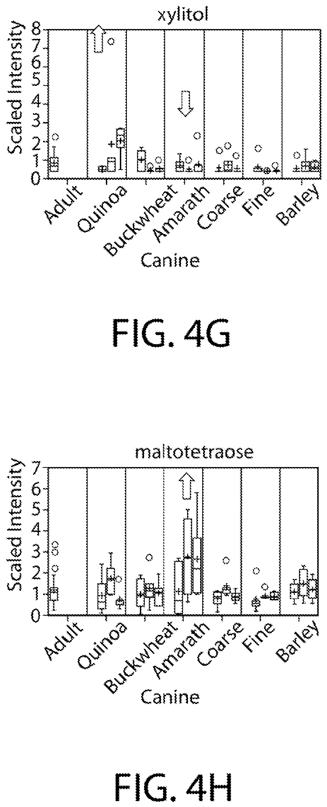

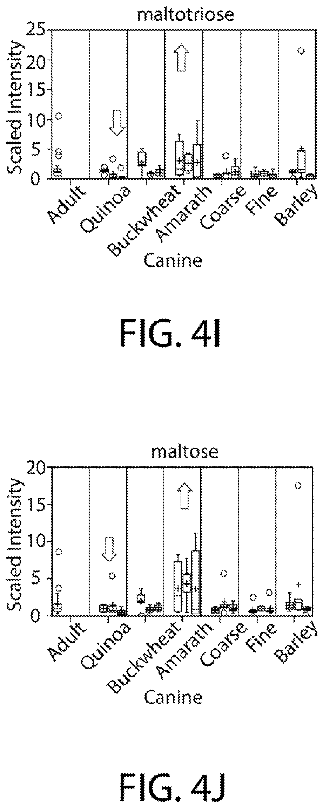

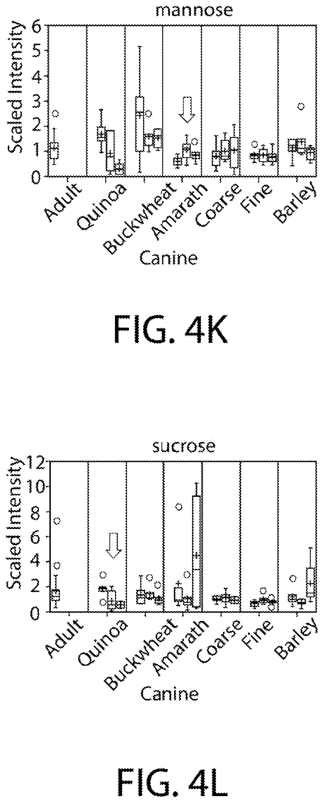

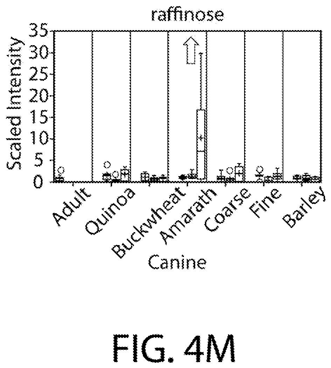

As shown in Figure 4A and Figure 4B, dogs fed with the quinoa diet had decreased levels of glucose, glycogen and sucrose, while increased levels of intermediates in the glycolytic and pentose phosphate pathways, suggesting an increased utilization of glucose for energy and nucleotide production. On the other hand, dogs fed with the amaranth diet had decreased levels of pentose intermediates and mannose, but increased levels of glycogen-related metabolites, such as maltotetraose, maltotriose and maltose, suggesting that amaranth favored glucose storage, perhaps reflecting the higher di- and oligo-saccharide contents in the amaranth diet.

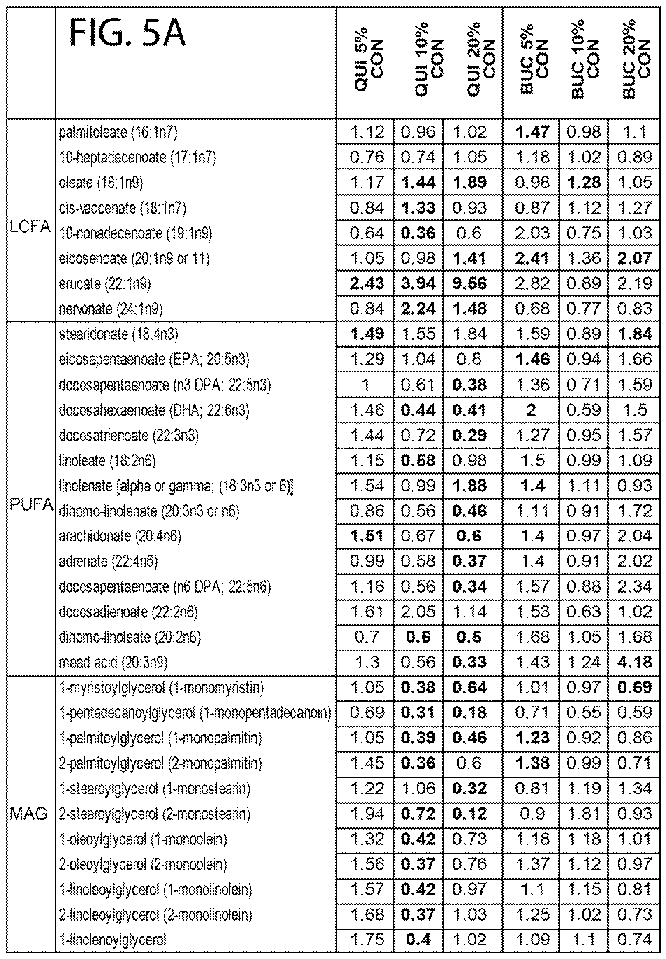

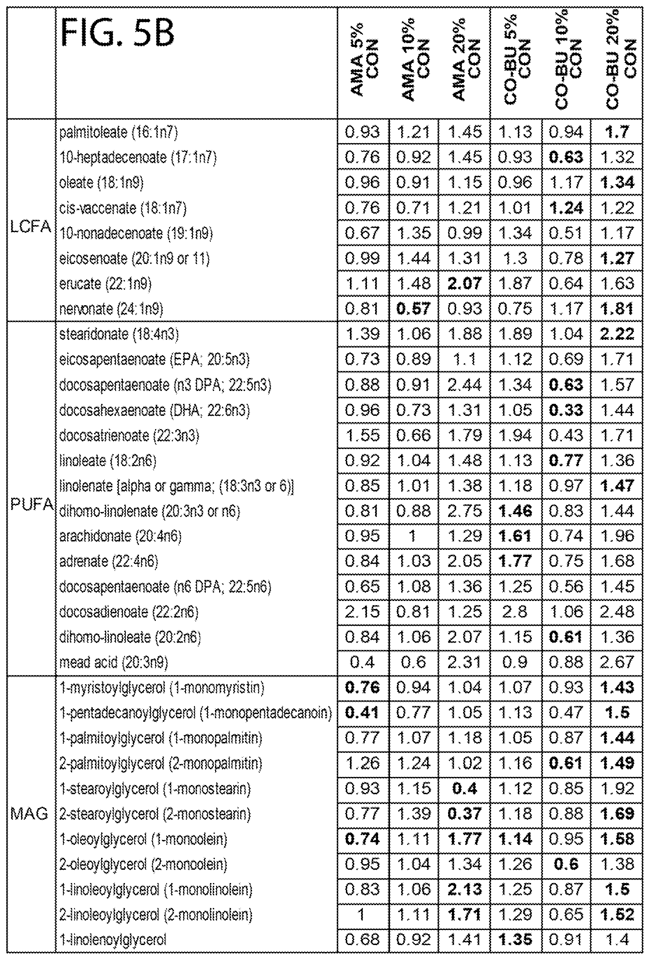

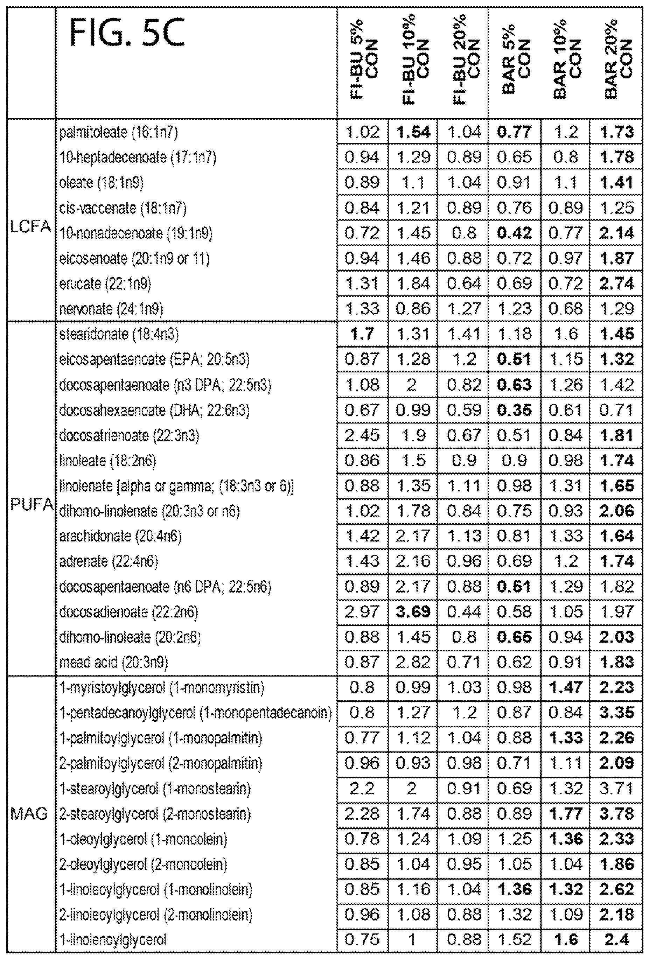

As shown in Figure 5, dogs fed with the quinoa diet had increased levels of long chain fatty acids (LCFA), while decreased levels of polyunsaturated fatty acids (PUFA) and monoacylglycerols (MAG). On the other hand, dogs fed with the 20% Barley diet had increased levels of all these classes of lipid metabolites, indicating somewhat opposite effects.

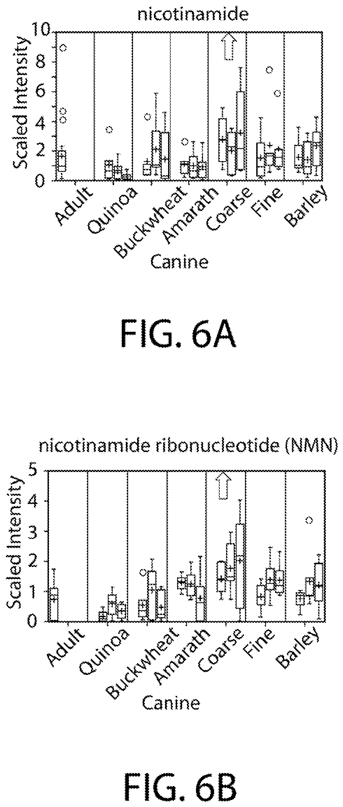

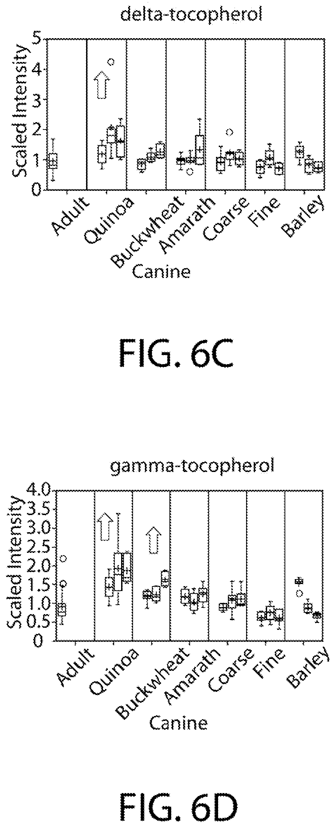

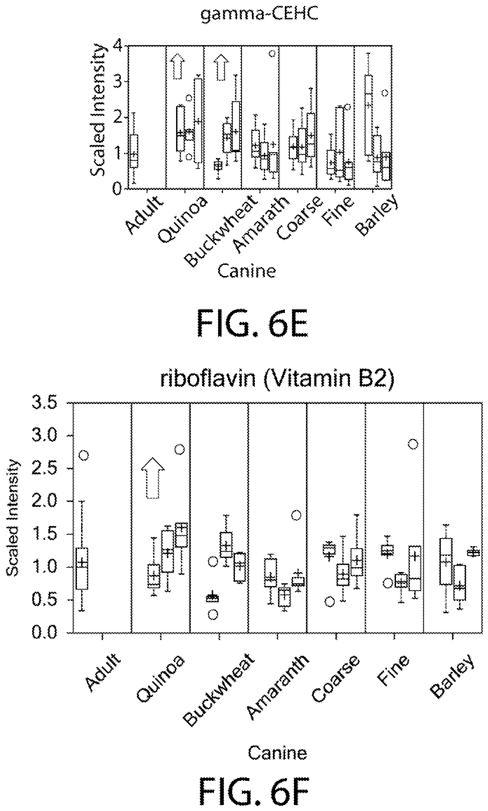

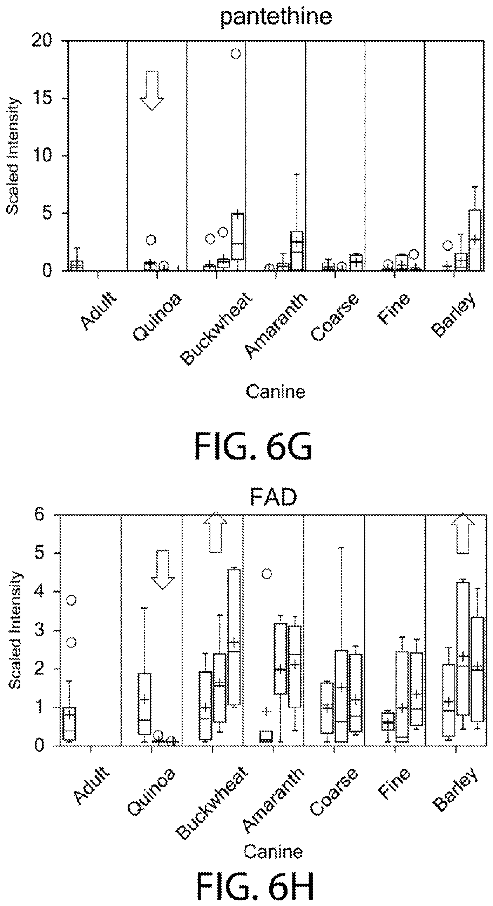

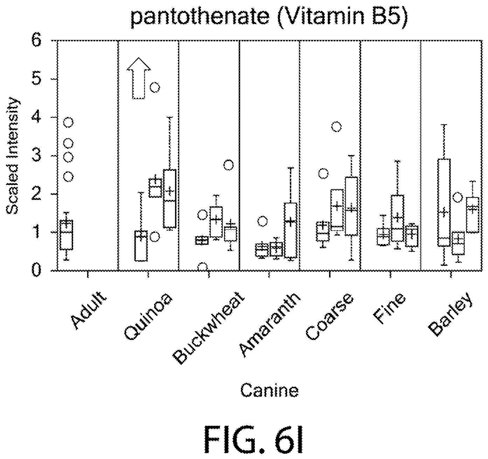

As shown in Figures 6A and 6B, dogs fed with the quinoa and buckwheat diets had relatively higher levels of tocopherols and tocopherol catabolites. Dogs fed with the coarse bulghur diet had increased nicotinamide and nicotinamide ribonucleotide compared to the controls and other dietary groups. Dogs fed with the Quinoa diet had increased levels of riboflavin (vitamin B2) but decreased levels of flavin adenine dinucleotide (FAD), indicating a reduced synthesis of FAD from riboflavin upon Quinoa ingestion. On the other hand, dogs fed buckwheat and barley had increased levels of FAD. Changes in FAD may greatly impact processes such as electron transport chain, fatty acid oxidation and folate synthesis, since all these processes require FAD as the cofactor.

Figures 6A and 6B also show that dogs fed with the quinoa diet had decreased pantethine but increased pantothenate. Pantethine is the precursor for pantothenate (vitamin B5), and both pantethine and pantothenate are involved in the biosynthesis pathway of Coenzyme A, suggesting that quinoa may impact the synthesis of Coenzyme A.

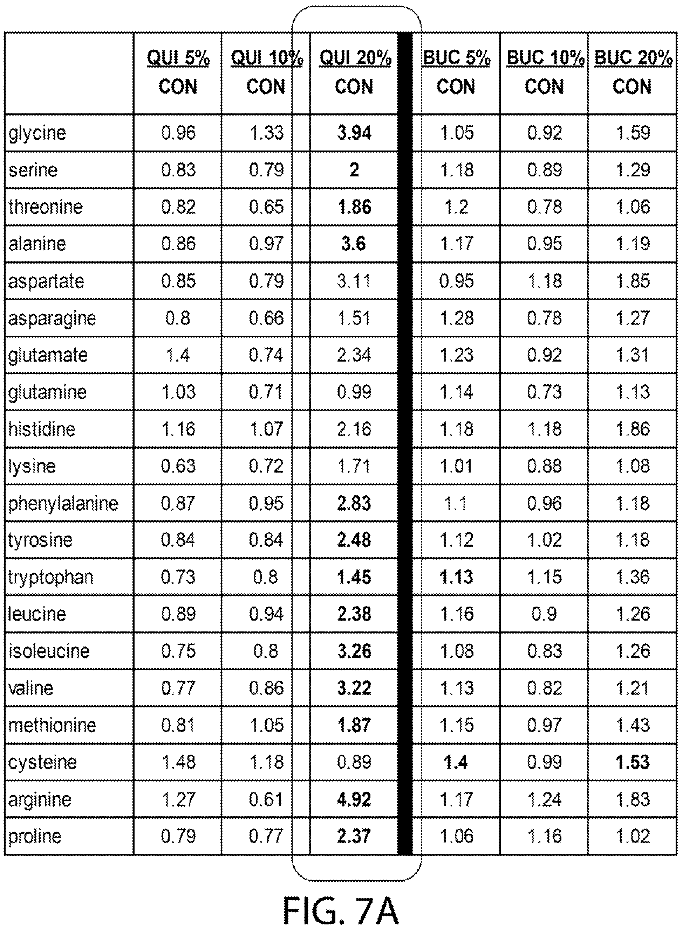

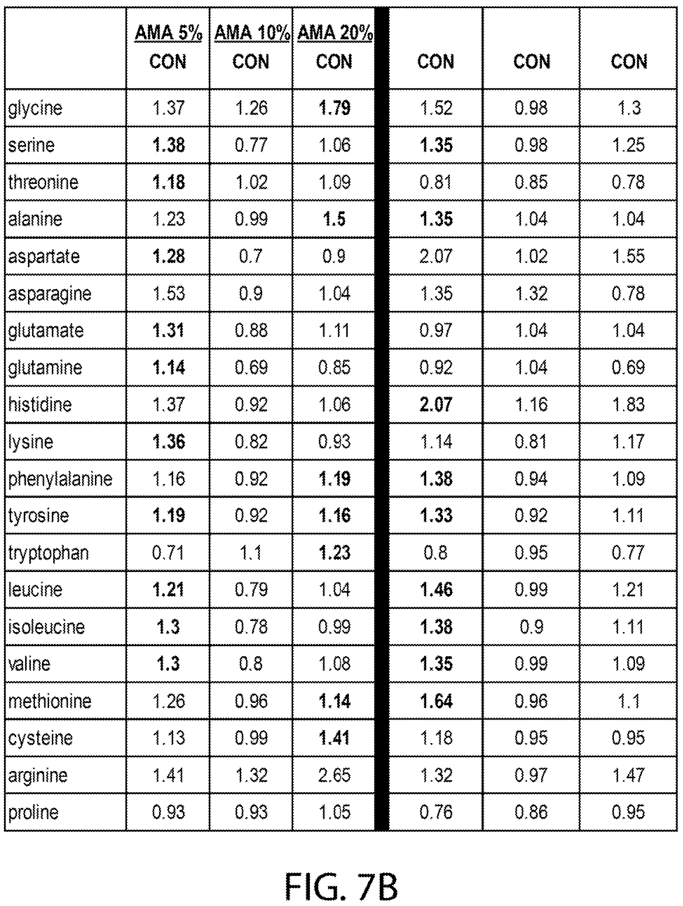

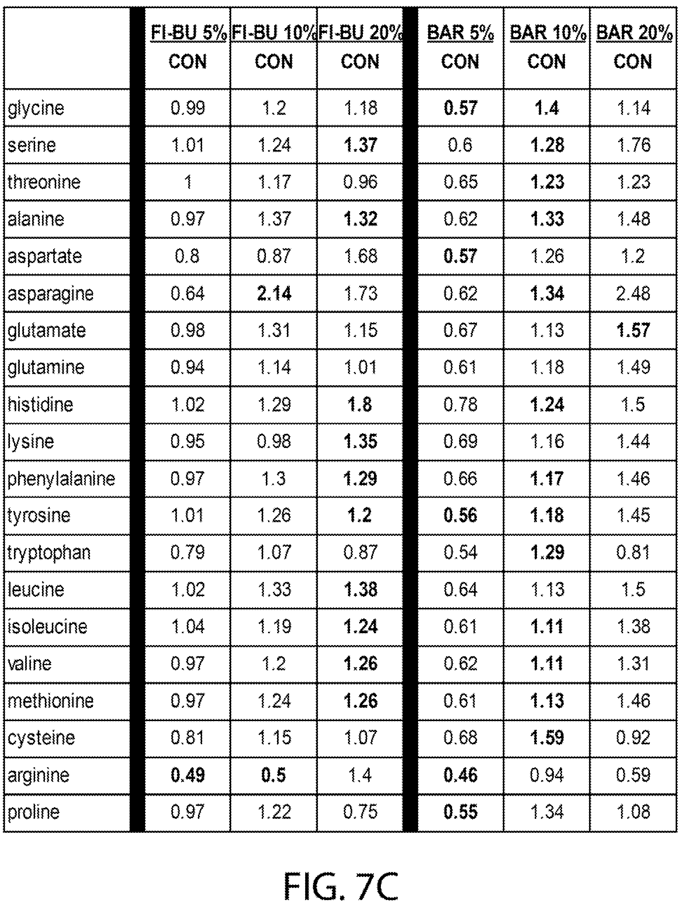

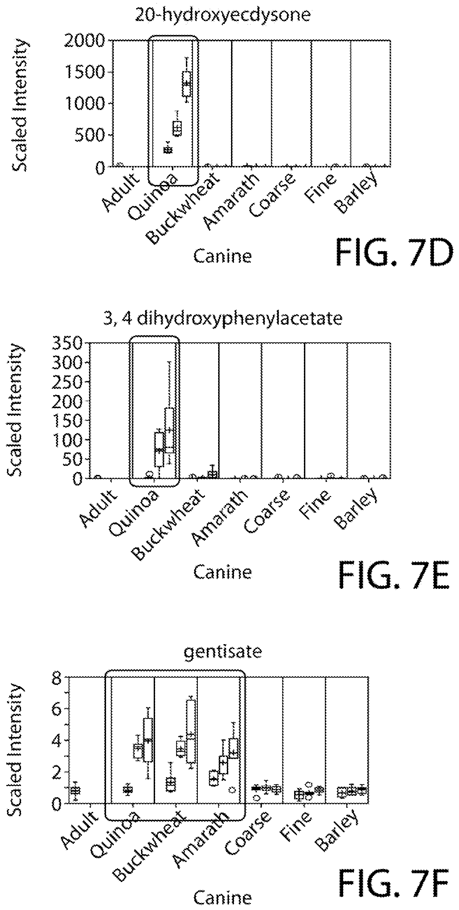

As shown in Figure 7, dogs fed with the quinoa diet had increased amounts of 20-hydroxyecdysone (200-1800 fold increases relative to the control group), which may be invovled in protein synthesis and muscle enhancement. Figure 7 also show that quinoa, buckwheat and amaranth increased the levels of gentisate, a byproduct of tyrosine and benzoate metabolism and may have anti-inflammatory, antirheumatic and antioxidant properties. In addition, the quinoa increased the levels of 3,4-dihydroxyphenylacetate, a metabolite of dopamine that may be involved in antiproliferative effect in certain cancer lines.

### Example 4 (not according to the invention)

Cats were fed a control diet or one of the six diets containing different types of grains at the concentrations of 5%, 10% or 20% as described in Table 1. Fecal samples were collected and analyzed for metabolites.

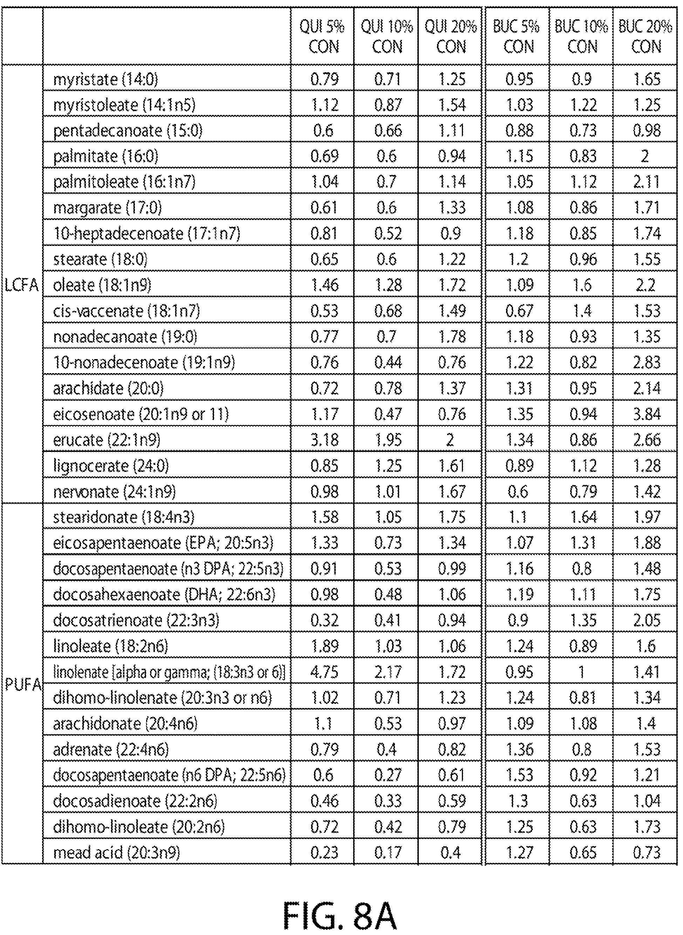

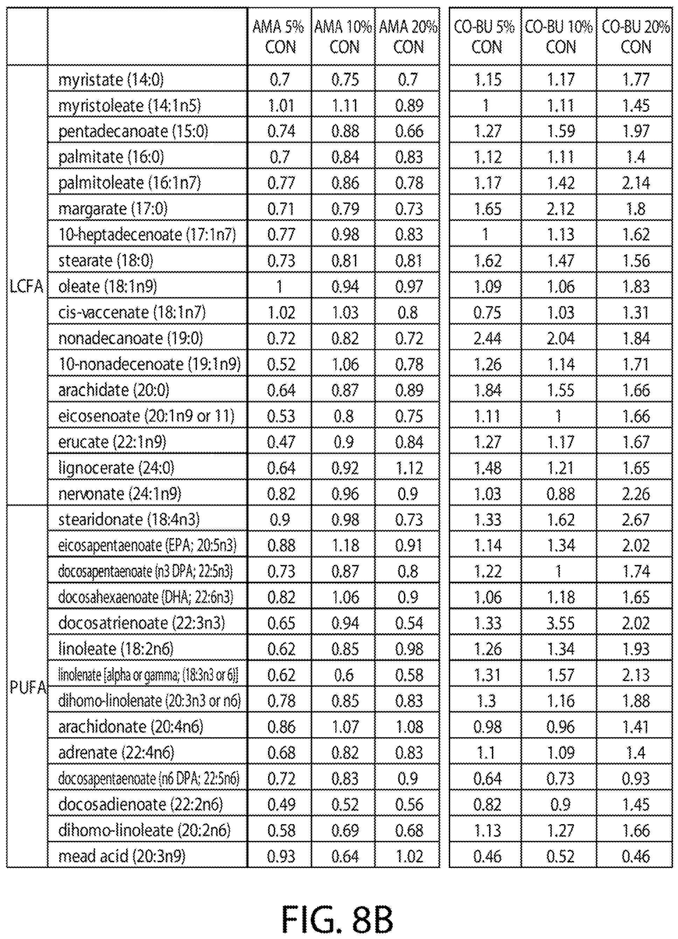

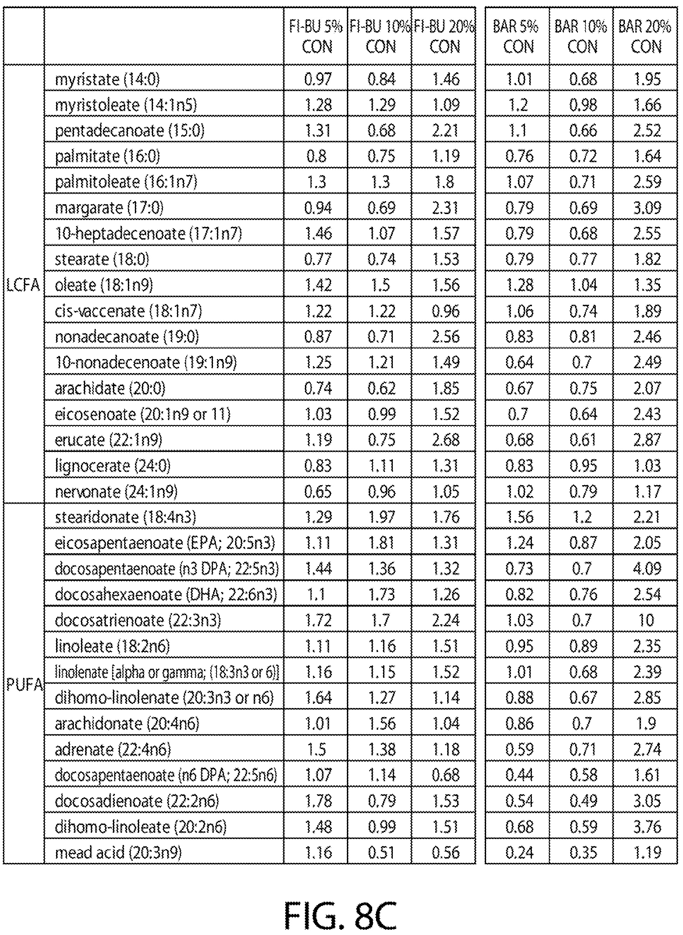

As shown in Figure 8, several types of grain diets induced the levels of amino acids in cat fecal samples. In particular, cat fed with the 20% quinoa diet had some amino acids that show 5-fold difference compared to the control group.

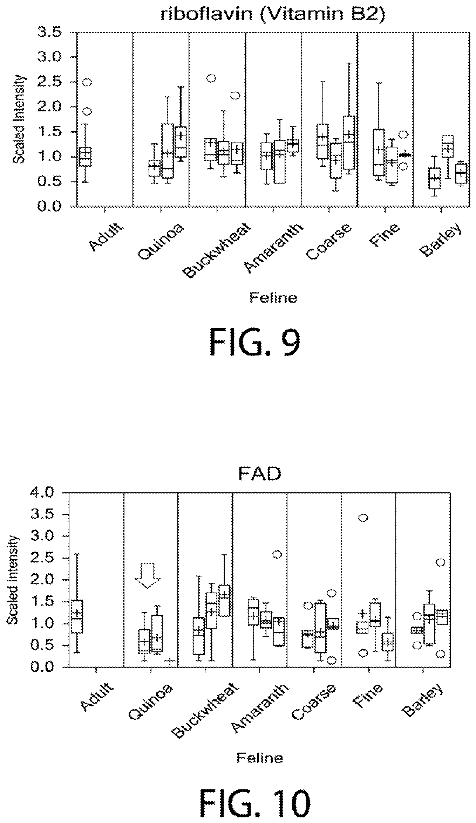

As shown in Figure 9, the quinoa diet (10%) led to decreased levels of fatty acids in cat. In addition, the barley diet (20%) led to increased levels of fatty acids in cats. Figure 9 also shows that cats fed with the coarse bulghur diet demonstrated significant changes in lipid metabolism. Cats fed with the 20% coarse bulghur diet had increased levels of LCFA and PUFA relative to the controls, suggesting that coarse bulghur may impact lipid absorption, catabolism or secretion in cats.

As shown in Figure 10, cats fed with the quinoa diet had increased levels of riboflavin (vitamin B2) and decreased levels of FAD. FAD levels were decreased by 50% in quinoa 5% group and by 88% in quinoa 20% groups relative to the control group, suggesting that Quinoa may impact FAD metabolism, which may further affect FAD dependent pathways.

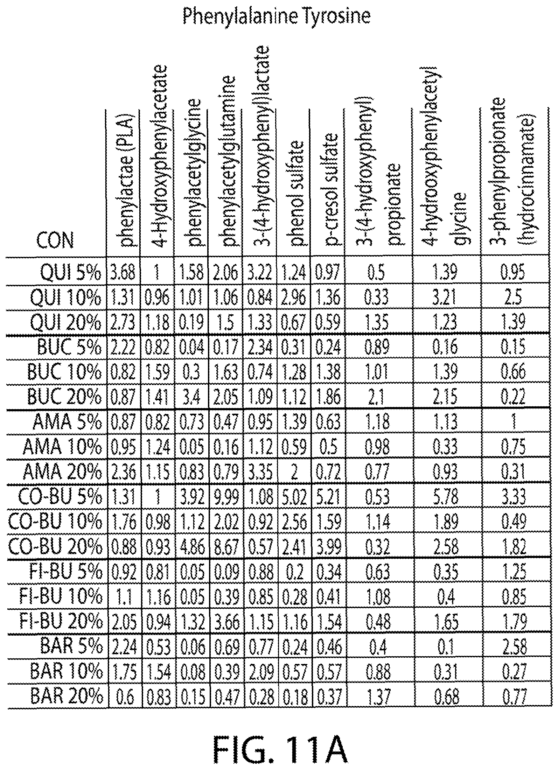

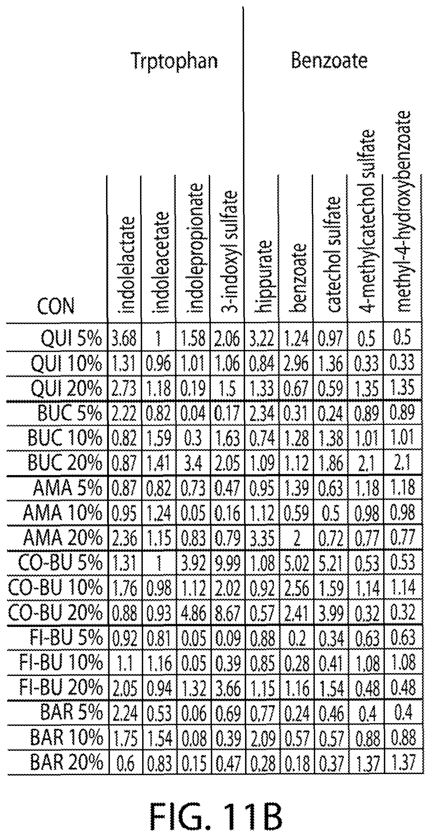

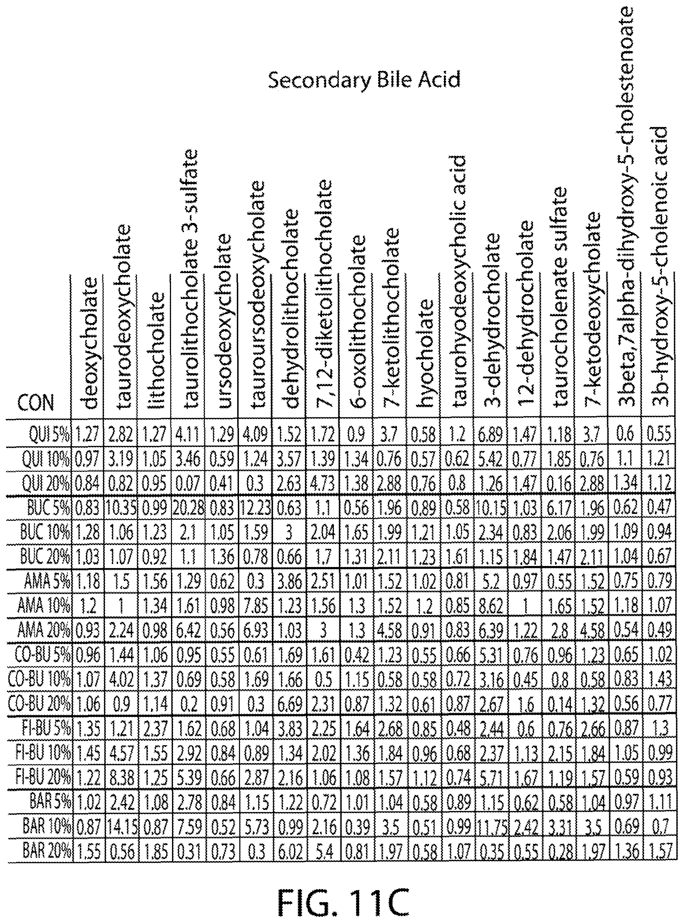

Figure 11 lists a number of biochemicals whose metabolism may be associated with microbiome in cats. As shown in Figure 11, different diets at different concentrations had varied effects on these biochemicals.

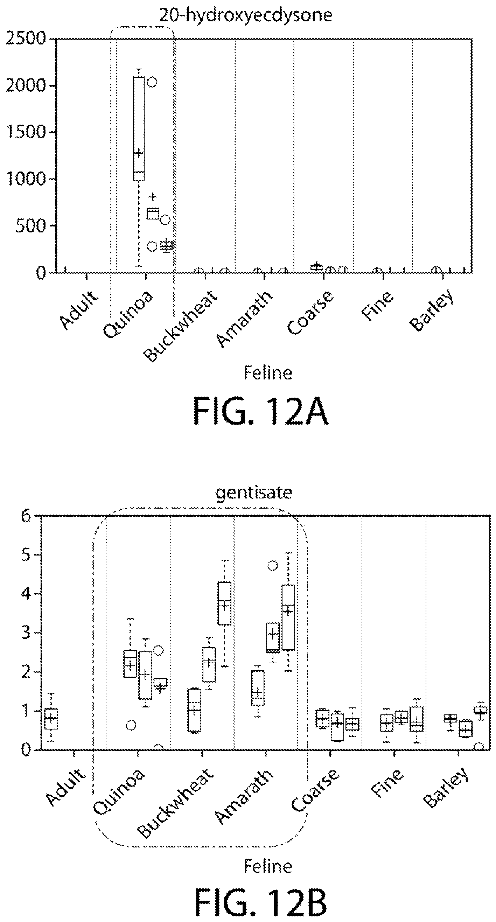

As shown in Figure 12, cats fed with the quinoa diet had increased amounts of 20-hydroxyecdysone (200-1800 fold increases relative to the control group), which may be involved in protein synthesis and muscle enhancement. Figure 12 also show that quinoa, buckwheat and amaranth increased the levels of gentisate, a byproduct of tyrosine and benzoate metabolism and may have anti-inflammatory, antirheumatic and antioxidant properties.

## Claims

1. A non-therapeutic method of altering one or more parameters of commensals in an animal, comprising feeding the animal a diet comprising quinoa grain in an amount effective to alter one or more parameters of commensals in the animal, wherein the one or more parameters of commensals includes increasing at least the percentage of clostridium in total microbiota in the animal, and wherein the animal is a cat or a dog.

2. The method of claim 1, wherein the amount of the quinoa grain is effective to increase the percentage of lactobacillus in total microbiota and the percentage of clostridium in total microbiota.

3. The method of claim 2, wherein the amount of quinoa grain is effective to increase the percentage of lactobacillus in total microbiota in the animal compared to the percentage of lactobacillus in total microbiota in the animal before the animal is fed the diet in at least an amount selected from the group consisting of 20%, 30%, 40%, 50%, 100%, 150%, and 200%.

4. The method of claim 1, wherein the amount of quinoa grain is effective to increase the percentage of clostridium in total microbiota in the animal compared to the percentage of clostridium in total microbiota in the animal before the animal is fed the diet in at least an amount selected from the group consisting of 50%, 75%, 100%, 125%, 150% and 175%.

5. The method of any of claims 1-4, further comprising establishing a baseline in the animal for the percentage of clostridium in total microbiota, and optionally for the percentage of lactobacillus in total microbiota.

6. The method of claim 5, further comprising measuring the percentage of clostridium in total microbiota, and optionally the percentage of lactobacillus in total microbiota in the animal at one or more time points after the animal has been fed the diet comprising quinoa grain and comparing the measured amount to the baseline.

7. The method of any of claims 1-6, wherein the amount of quinoa grain is effective to increase at least the percentage of clostridium in total microbiota, and optionally the percentage of lactobacillus in total microbiota when the animal is fed with the diet comprising the effective amount of quinoa grain for at least a period of time selected from the group consisting of: 10 days, 12 days, 14 days and 20 days.

## Patentansprüche

1. Nicht-therapeutisches Verfahren zur Veränderung eines oder mehrerer Parameter von Kommensalen in einem Tier, umfassend das Füttern des Tieres mit einer Diät, die Quinoakorn in einer Menge umfasst, die wirksam ist, um einen oder mehrere Parameter von Kommensalen in dem Tier zu verändern, wobei der eine oder die mehreren Parameter von Kommensalen mindestens die Erhöhung des Prozentsatzes von Clostridium in der Gesamtmikrobiota in dem Tier einschließen, und wobei das Tier eine Katze oder ein Hund ist.

2. Verfahren nach Anspruch 1, wobei die Menge des Quinoakorns wirksam ist, um den Prozentsatz von Lactobacillus in der Gesamtmikrobiota und den Prozentsatz von Clostridium in der Gesamtmikrobiota zu erhöhen.

3. Verfahren nach Anspruch 2, wobei die Menge an Quinoakorn wirksam ist, um den Prozentsatz von Lactobacillus in der Gesamtmikrobiota in dem Tier im Vergleich zu dem Prozentsatz von Lactobacillus in der Gesamtmikrobiota in dem Tier vor dem Füttern des Tieres mit der Diät um mindestens eine Menge zu erhöhen, die ausgewählt ist aus der Gruppe bestehend aus 20%, 30%, 40%, 50%, 100%, 150% und 200%.

4. Verfahren nach Anspruch 1, wobei die Menge an Quinoakorn wirksam ist, um den Prozentsatz von Clostridium in der Gesamtmikrobiota in dem Tier im Vergleich zu dem Prozentsatz von Clostridium in der Gesamtmikrobiota in dem Tier vor dem Füttern des Tieres mit der Diät um mindestens eine Menge zu erhöhen, die ausgewählt ist aus der Gruppe bestehend aus 50%, 75%, 100%, 125%, 150% und 175%.

5. Verfahren nach einem der Ansprüche 1-4, ferner umfassend das Festlegen eines Basiswertes in dem Tier für den Prozentsatz von Clostridium in der Gesamtmikrobiota und gegebenenfalls für den Prozentsatz von Lactobacillus in der Gesamtmikrobiota.

6. Verfahren nach Anspruch 5, ferner umfassend das Messen des Prozentsatzes von Clostridium in der Gesamtmikrobiota und gegebenenfalls des Prozentsatzes von Lactobacillus in der Gesamtmikrobiota in dem Tier zu einem oder mehreren Zeitpunkten, nachdem das Tier mit der Diät, die Quinoakorn umfasst, gefüttert wurde, und das Vergleichen der gemessenen Menge mit dem Basiswert.

7. Verfahren nach einem der Ansprüche 1-6, wobei die Menge an Quinoakorn wirksam ist, um mindestens den Prozentsatz von Clostridium in der Gesamtmikrobiota und gegebenenfalls den Prozentsatz von Lactobacillus in der Gesamtmikrobiota zu erhöhen, wenn das Tier mit der Diät, die die wirksame Menge an Quinoakorn umfasst, für mindestens einen Zeitraum gefüttert wird, der ausgewählt ist aus der Gruppe bestehend aus: 10 Tagen, 12 Tagen, 14 Tagen und 20 Tagen.

## Revendications

1. Procédé non thérapeutique de modification d'un ou de plusieurs paramètres de commensaux chez un animal, comprenant l'alimentation de l'animal avec un régime alimentaire comprenant du grain de quinoa en une quantité efficace pour modifier un ou plusieurs paramètres de commensaux chez l'animal, dans lequel lesdits un ou plusieurs paramètres de commensaux incluent l'augmentation au moins du pourcentage de clostridium dans le microbiote total chez l'animal, et dans lequel l'animal est un chat ou un chien.

2. Procédé selon la revendication 1, dans lequel la quantité de grain de quinoa est efficace pour augmenter le pourcentage de lactobacillus dans le microbiote total et le pourcentage de clostridium dans le microbiote total.

3. Procédé selon la revendication 2, dans lequel la quantité de grain de quinoa est efficace pour augmenter le pourcentage de lactobacillus dans le microbiote total chez l'animal par rapport au pourcentage de lactobacillus dans le microbiote total chez l'animal avant que l'animal ne soit nourri avec le régime alimentaire d'au moins une quantité choisie dans le groupe constitué de 20 %, 30 %, 40 %, 50 %, 100 %, 150 % et 200 %.

4. Procédé selon la revendication 1, dans lequel la quantité de grain de quinoa est efficace pour augmenter le pourcentage de clostridium dans le microbiote total chez l'animal par rapport au pourcentage de clostridium dans le microbiote total chez l'animal avant que l'animal ne soit nourri avec le régime alimentaire d'au moins une quantité choisie dans le groupe constitué de 50 %, 75 %, 100 %, 125 %, 150 % et 175 %.

5. Procédé selon l'une quelconque des revendications 1 à 4, comprenant en outre l'établissement d'une ligne de base chez l'animal pour le pourcentage de clostridium dans le microbiote total, et éventuellement pour le pourcentage de lactoba-cille dans le microbiote total.

6. Procédé selon la revendication 5, comprenant en outre la mesure du pourcentage de clostridium dans le microbiote total, et éventuellement du pourcentage de lactobacillus dans le microbiote total chez l'animal à un ou plusieurs moments après que l'animal ait été nourri avec le régime alimentaire comprenant du grain de quinoa et la comparaison de la quantité mesurée à la ligne de base.

7. Procédé selon l'une quelconque des revendications 1 à 6, dans lequel la quantité de grain de quinoa est efficace pour augmenter au moins le pourcentage de clostridium dans le microbiote total, et éventuellement le pourcentage de lactobacillus dans le microbiote total lorsque l'animal est nourri avec le régime alimentaire comprenant la quantité efficace de grain de quinoa pendant au moins une durée choisie dans le groupe constitué par : 10 jours, 12 jours, 14 jours et 20 jours.
